Europäisches Patentamt

(19) European Patent Office

Office européen des brevets

(11) Publication number: **0 073 116**
**B1**

(12) # EUROPEAN PATENT SPECIFICATION

(45) Date of publication of patent specification: **14.12.88**

(51) Int. Cl.⁴: **G 06 F 7/52,** G 06 F 15/347, G 06 F 15/332, G 06 F 15/336

(21) Application number: **82304165.2**

(22) Date of filing: **06.08.82**

(54) Integrated data processing circuits.

(30) Priority: **18.08.81 GB 8125222**
**20.04.82 GB 8211416**

(43) Date of publication of application:
**02.03.83 Bulletin 83/09**

(45) Publication of the grant of the patent:
**14.12.88 Bulletin 88/50**

(84) Designated Contracting States:
**DE FR NL**

(56) References cited:

THE RADIO AND ELECTRONIC ENGINEER, vol. 45, no. 3, March 1975, pages 116-120, London, GB; P.M. THOMPSON et al.: "Digital arithmetic units for a high data rate"

IEEE TRANSACTIONS ON COMPUTERS, vol. C-24, no. 3, March 1975, pages 317-322, New York, US; J. DEVERELL: "Pipeline iterative arithmetic arrays"

(73) Proprietor: **NATIONAL RESEARCH DEVELOPMENT CORPORATION**
**101 Newington Causeway**
**London SE1 6BU (GB)**

(72) Inventor: **McCanny, John Vincent**
**5 Larchfield Close**
**Malvern Worcestershire (GB)**
Inventor: **McWhirter, John Graham**
**27 The Moorlands Hanley Road**
**Malvern Worcestershire (GB)**
Inventor: **Wood, Kenneth William**
**12 Westacres Crescent**
**Newcastle-upon-Tyne, NE15 7PB (GB)**

(74) Representative: **Robinson, Frederick Robert et al**
**Procurement Executive Ministry of Defence Patents 1 A (4) Room 2012 - 14 Empress State Building Lillie Road**
**London SW6 1TR (GB)**

(56) References cited:

ELECTRONICS LETTERS, vol. 8, no. 4, 24th February 1972, pages 100-101, Hitchin, Herts, GB; K.J. DEAN et al.: "General iterative array"

Courier Press, Leamington Spa, England.

**EP 0 073 116 B1**

(56) References cited:

SIGNAL PROCESSING: THEORIES AND APPLICATIONS, PROCEEDINGS OF EUSIPCO-80, FIRST EUROPEAN SIGNAL PROCESSING CONFERENCE, 16th-18th September 1980, Lausanne, CH, North-Holland Publishing Company, Amsterdam, NL; L. CIMINIERA et al.: "High speed correlator circuits"

IEEE TRANSACTIONS ON COMPUTERS, vol. 21, no. 8, August 1972, pages 880-886, IEEE, New York, US; T.G. HALLIN et al.: "Pipelining of arithmetic functions"

AUTOMATISME, vol. 21, no. 10, October 1976, pages 302-314, Paris, FR; M. MRAYATI et al.: "Conception et réalisation de filtres numériques"

ELECTRONICS LETTERS, vol. 18, no. 6, March 1982, pages 241-243, London, GB; J.V. McCANNY et al.: "Implementation of signal processing functions using 1-bit systolic arrays"

## Description

The invention concerns improvements in or relating to integrated circuits and especially, but not exclusively to modular architectures at bit level particularly suitable for large scale integration (LSI) and very large scale integrated (VLSI) data processors.

Some prior art designs for data processing circuits in LSI and VLSI have formed a continuation of the relatively random constructions used in smaller scale integration and hybrid circuits. Such approaches tend to produce circuits which consist of blocks of random logic all of which have to be individually designed. On going to VLSI these methods become impractical for a number of reasons. One such reason is that the characteristics of possibly hundreds of thousands of transistors may have to be tailored individually. Secondly, totally random layouts may take many man years of effort to construct and subsequently check. Additionally, the circuits are difficult and sometimes impossible to test and may require extra testing circuits to be incorporated into the design. In addition, for example, the resulting use of long conducting interconnections between circuit elements which cannot be positioned close together on a chip increases stray capacitance. This acts to reduce the potential switching speed of a circuit. Additionally, the need for large drivers is concomitantly increased.

For LSI and VLSI an additional problem with timing delays is introduced due to transmission line effects coming into play. These arise when the total resistance of inter-connections is relatively high thus making the transmission line component of any time delays dominant. In prior art LSI such transmission line effects are observed in polysilicon wires. The reasons for this can be seen by considering that, as the cross sections of integrated circuit components are scaled down for VLSI, the resistance per unit length of conductor paths increases quadratically with scaling factor. As a result, transmission line effects may be observed even in high conductivity connections such as aluminium wires on VLSI chips. A major limitation of such effects is that they cause data propagation delays proportional to (length of wire)$^2$. The maximum speed of operation of a circuit is therefore limited.

Overall, synchronisation of signals across a circuit therefore demands in-depth analysis and leads to complex designs to compensate for the delays involved.

At a higher level, rationalisation of data processor architecture has been attempted by use of modular designs employing regular arrays of sub-processors, each of which performs a specified function at data word level. The individual sub-processors then work in sympathy with each other to produce an overall data processing function. However, the design advantages of the systematic modular approach at sub-processor level have not been taken into account within the subprocessors themselves.

Prior art techniques have included "ripple-through" multipliers ie multipliers in which a multiplication step involves the completion of the multiplication of a digit of the multiplier by the multiplicand and in which a following step does not begin until the digit of the multiplier involved in a previous step has rippled through and all the processing circuits have interacted with each other to complete that step. These have employed arrays of multiplying cells for multiplying the bits of the multiplier and multiplicand. Ripple-through designs, however, have time penalties due to the necessity to ripple through each digit of the multiplier and its associated carry-over digits at each stage of the multiplication. Attempts to alleviate these time penalties have led to introduction of "pipelining" into the cell arrays ie the splitting up of the arrays into sections by introducing latches between some of the cells in order to split each stage of the multiplication into sub-stages such that it is now necessary only for each sub-stage to be completed before the next is allowed to begin. Multiplier digits may, therefore, be fed in and product digits output at a rate faster than is allowed by the ripple-through design.

Prior art pipelined arrays have included Guild arrays, shift-and-add arrays and carry-save arrays. However, in all these prior art arrays, for each bit of the multiplier, it is necessary at some stage in the multiplication to broadcast the bit to all bits of the multiplicand in a single time interval. For a multiplication involving a multiplicand with more than a small number of bits, such broadcasting leads to delays which severely limit the maximum clock frequency attainable as the total capacitance loading on the appropriate line (gate capacitance plus interconnect capacitance) may be sizeable. Large current (and area) drivers can be used to improve propagation speeds on such a line, but they themselves impose a delay—the driver amplifier delay—on the relevant signal. Moreover the physical size of the driver required often forces a compromise on circuit speed.

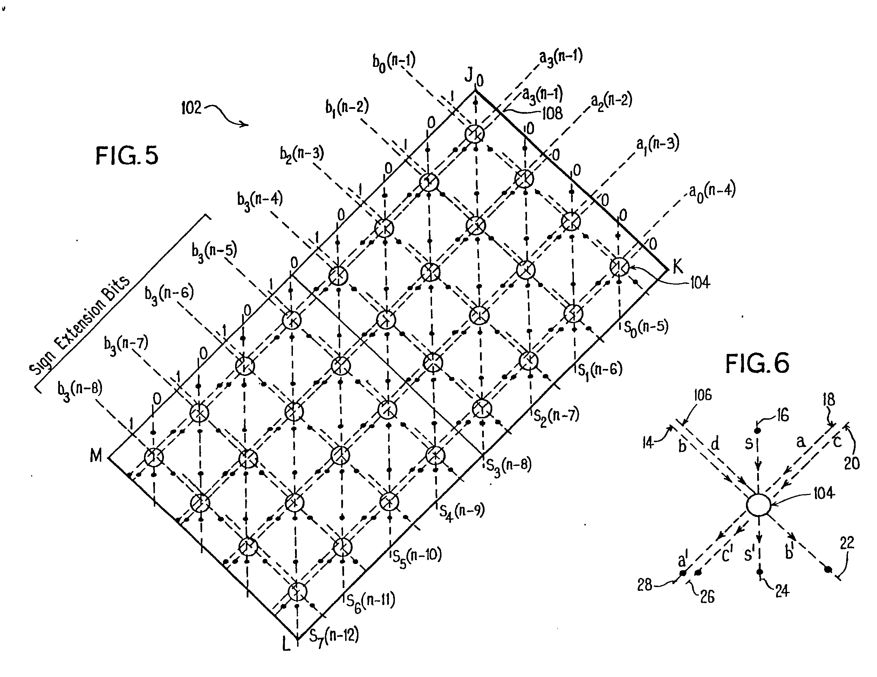

In IEEE Transactions on Computers, Vol C-24, No. 3, March 1975, pages 317—322, J. Deverell discusses the use of latches to partition arrays of arithmetic logic cells in order to produce pipelined multiplication. He describes a Wallace tree multiplier, a Guild array, together with ripple-carry and carry-save arrays. The arrays are suitable for multiplication of one digital number by another. The Guild, ripple-carry and carry-save arrays comprise gated full adder cells with intercell latches to provide pipelining. Each cell is connected to up to eight other cells (see Figure 5), via row and column interconnections and diagonal interconnections.

In the Radio and Electronic Engineer, Vol. 45, No. 3, March 1975, pages 116—120, Thompson and Belanger describe multiplication of two numbers using a systolic array of gated full adder cells. Each cell is connected to up to six other cells via row, column and diagonal interconnections containing pipelining latches.

The prior art of Deverell and of Thompson et al is adequate for the comparatively simple exercise of multiplying two numbers, but the circuitry becomes undesirably complex when extended to the computation of higher order calculations. For example, to multiply a matrix W by a vector $X$ to form a product vector $Y$, it is necessary to carry out a number of calculations of the form:—

$$y_i = \sum_j w_{ij}x_j$$

where $y_i$, $w_{ij}$ and $x_j$ are the coefficients of $Y$, $W$ and $X$ respectively.

The devices of Deverell and Thompson et al are suitable for computing only a single $w_{ij}x_j$. To adapt them for computations involving many partial products such as matrix-vector multiplication, it would be necessary to decompose the matrix and vector into individual number-number multiplications with some form of pre-processing input device. Subsequently, the partial products would require regrouping and addition to form each $y_i$ separately. After decomposition, the $w_{ij}x_j$ computations might be carried out sequentially by a single array. Alternatively, they might be calculated simultaneously by a number of arrays in parallel. Sequential computation necessarily involves considerable time delay, and simultaneous computation requires each $x_j$ coefficient to be broadcast to a number of different $w_{ij}$ matrix elements via a complex interconnection scheme.

It is an object of the present invention to provide a pipelined systolic array suitable inter alia for matrix-vector multiplication.

The present invention provides a digital data processor comprising:—

(a) an array of bit-level arithmetic logic cells arranged in rows and columns, each cell being arranged to receive input multiplicand, carry and cumulative sum bits and generate output carry and cumulative sum bits in accordance with its logic operation,

(b) cell interconnection lines arranged for bit propagation through the array, the lines including clock-activated storing means for bit storage and advance,

(c) clocking means for control or array operation, the clocking means being arranged to activate the storing means appropriately to synchronise input of successive combinations of bits to each cell and to cascade generation of cumulative sums along cell interconnection lines, and

(d) array outputs connected to respective cells appropriate to provide cumulative sums resulting from cell logic operations cascaded through the array; characterised in that:—

(i) the cell interconnection lines connect nearest row and column neighbour cells only and provide routes for all bit propagation through the array, and

(ii) the array is connected to clock-activated input means arranged to provide multiplicand input bits with relatively delays appropriate in combination with those of the storing means to provide for cumulative sum accumulation in cascade along cell interconnection lines.

The array of the invention differs from the prior art of Thomson et al and Deverell in that diagonal cell interconnections for bit propagation are not required. Furthermore, as will be described later, the array is suitable for computing partial products for matrix-vector multiplication without the need for decomposition of the input matrix and vector into individual number-number multiplications.

Each storing means may comprise two independently activatable half latches in series, the clocking means being arranged to activate the half latches alternately to effect bit output and input. Each logic cell may be arranged to receive two input multiplicand bits. The array may be arranged to receive bit-parallel input multiplicands; each cell is then arranged to output carry bits to a respective neighbouring cell.

In one embodiment, the invention may be arranged to multiply a vector by a matrix having coefficients equal to 1 or 0. The digital data input means then includes a first array of clock activatable delaying means arranged for vector input to a first array edge and a second array of such delaying means arranged for matrix coefficient input to a second array edge adjacent the first array edge. In addition, each cell may be arranged to pass each new carry bit to a respective neighbour relatively more remote from the second array edge. In this case, the first array of delaying means is then arranged for vector input in a bit parallel, word serial manner, and the second array of delaying means is arranged to input successive diagonals of the matrix to the second array edge.

The processor of the invention may be accompanied by at least one other like processor to form an assembly of j processors where j is a positive integer at least equal to two. The digital data input means is then arranged such that the kth processor receives a respective matrix having one bit coefficients consisting of and arranged in that matrix as individual bits (k−1)th order of bit significance from multi-bit elements of a further matrix, where k=1 to j.

In a further embodiment of the invention:

(1) each cell is arranged to:

(a) receive input carry and cumulative sum bits together with two multiplicand input bits of respective first and second kinds,

(b) generate a new carry bit and an intermediate sum bit corresponding to addition of the input sum and carry bits to the product of the input multiplicand bits,

(c) output the new carry bit and the first kind multiplicand bit and feed back the intermediate sum bit,

(d) receive subsequent input carry and first kind multiplicand bits,

(e) generate a further carry bit and a cumulative sum bit corresponding to addition of the subsequent carry input bit and the intermediate sum bit to the product of the second kind input multiplicand bit with the subsequent first kind input multiplicand bit, and

(f) output the further carry and cumulative sum bits and the second and subsequent first kind multiplicand bits; and

(2) the clocking means is arranged to activate carry and first kind multiplicand bit storing means at twice the rate of that for other storing means, and to activate each of the said other storing means in antiphase with a respective corresponding storing means in an adjacent row.

The processor of the invention may be arranged to multiply a vector by a matrix having matrix element $+1$, $-1$, and $0$; each cell is then arranged to receive as multiplicand inputs a vector coefficient bit and two bits corresponding to an input matrix element.

The processor of the invention may alternatively be arranged for convolving or correlating a data stream with a set of coefficients, these being special cases of matrix-vector multiplication. In either case, each logic cell may be arranged to receive two input multiplicand bits counterpropagating along array rows, to output new carry bits along its row and to cascade cumulative sum generation down array columns. In addition, each array output line may be a column output connected to a respective member of a row of full adder accumulator cells. Each accumulator cell is then arranged to add each input cumulative sum bit to its respective preceding output sum bit and to output carry bits along the accumulator row.

The data input means in the previous embodiment may have feedforward lines to route multiplicand bits output from array rows via respective storing means to provide input to respective neighbouring rows. It may also include recirculation lines to route multiplicand bits output from each row via respective storing means to provide input to that row.

The invention may also include logic cells arranged to be bypassed in the event of malfunction.

The invention will now be described by way of example only with reference to the accompanying drawings comprising:

Figure 1 illustrating schematically the design of a portion of a pipelined multiplier for multiplying unsigned binary numbers.

Figure 2 illustrating schematically the operation of a processing cell used in the multiplier of Figure 1.

Figure 3 illustrating in block diagram form a portion of an extended version of the pipelined multiplier of Figure 1.

Figure 4 illustrating schematically a first modification of the portion of pipelined multiplier of Figure 1 for multiplying signed numbers.

Figure 5 illustrating schematically a second modification of the portion of pipelined multiplier of Figure 1 for multiplying signed binary numbers.

Figure 6 illustrating schematically the operation of a processing cell used in the multiplier of Figure 5.

Figure 7 illustrating schematically the design of a portion of a pipelined Walsh transform processor according to the invention.

Figure 8 illustrating schematically the operation of a processing cell used in the Walsh transform processor of Figure 7.

Figure 9 illustrating schematically the operation of an alternative processing cell.

Figure 10 illustrating schematically a master/slave latch.

Figure 11 illustrating in graphical form clocking waveforms for application to the latch of Figure 10.

Figure 12 illustrating in graphical form clocking waveforms for application to the processing cell of Figure 9.

Figure 13 illustrating schematically a portion of a data processor employing the processing cell of Figure 9.

Figure 14 illustrating schematically the input of matrix element bits to the portion of the data processor of Figure 13.

Figure 15 illustrating schematically the data movement and timing associated with an array of processing cells suitable for implementing part of a convolution operation.

Figure 16 illustrating schematically the operation of a processing cell of Figure 15.

Figure 17 illustrating schematically the operation of a processing cell for addition to the array of Figure 15.

Figure 18 illustrating schematically the data movement and timing associated with an array of processing cells suitable for implementing part of a convolution operation.

Figure 19 illustrating schematically a development of the type of array depicted in Figures 15 and 18.

Figure 20 illustrating schematically the operation of a processing cell of Figure 19.

Figure 21 illustrating schematically at word level the arrangement of data and coefficient bits in both a correlation processor and a convolution processor.

Figure 22 illustrating schematically at word level the arrangement of bits in a first matrix-vector multiplication processor.

Figure 23 illustrating schematically at word level the arrangement of bits in a second matrix-vector multiplication processor.

Figure 24 illustrating schematically the interaction of bits within part of an array of processing cells equivalent to the array of Figure 15.

Figure 25 illustrating a partitioning of the Figure 24 array.

5

Figure 26 illustrating schematically the operation of a processing cell included in Figure 24.

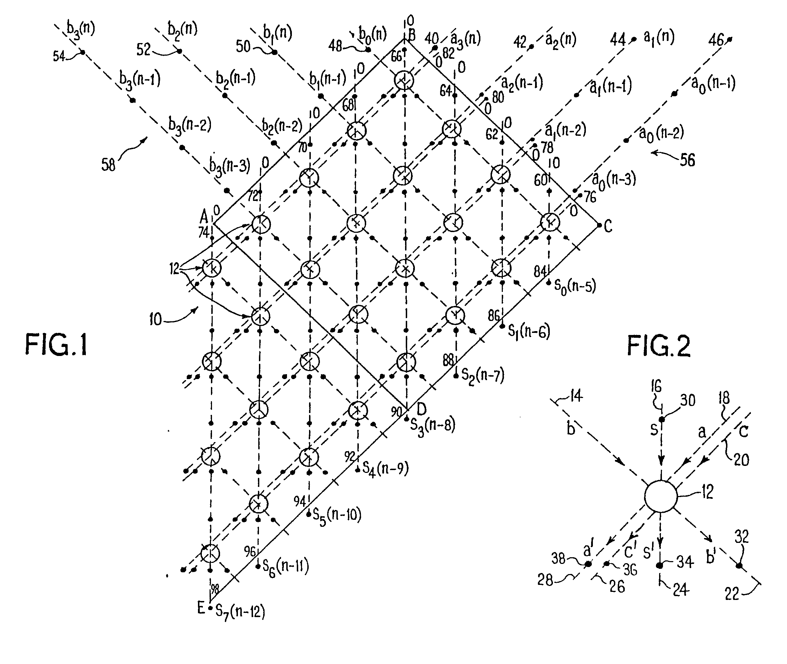

In Figure 1 the pipelined multiplier is for use in calculating the binary number, $s$, where:

$$s=s^0+(a\times b)+c$$

with $a$, $b$ and $c$ as unsigned four-bit numbers, $s$ as an unsigned eight-bit number, $s^0$ a number which must be expressed within eight bits and which has a value sufficiently low to keep $s(n)$ within eight bits.

The multiplier includes an array, 10, of identical processing cells, 12, the cells forming a square lattice arrangement and being interconnected by conducting lines.

The arrangement of a cell and interconnecting lines is shown in more detail in Figure 2.

In Figure 2 a cell, 12, has input lines 14, 16, 18 and 20 for bringing data bits into the cell and output lines 22, 24, 26 and 28 for taking data bits out of the cell. Each line transfers one bit to or from cell 12 in one cell operation.

The cell, 12, is a gated full adder which operates such that, for bits a, b, c and s input to the cell on lines 18, 14, 20 and 16 respectively, and bits a', b', c' and s' output on lines 28, 22, 26 and 24 respectively.

a'=a

b'=b

c'=(a.b).s+(a.b).c+s.c

and

s'=s⊕a.b⊕c

Latches in the form of memory sites 30, 32, 34, 36 and 38, each for storing a single bit, are disposed in lines 16, 22, 24, 26 and 28 respectively.

The operation of each of the cells, 12, is governed by a clocking means (not shown in the diagrams) which outputs clock pulses such that a first pulse causes each memory site to output its contents into the adjoining line in the directions shown in Figure 2 and a second pulse causes each memory site to store a resulting incoming bit. On the occurrence of a first type of clock pulse, sites equivalent to 30, 32, 36 and 38 output their stored bits to a processing cell equivalent to cell 12, so that it may perform a cell operation. At the same time sites equivalent to 34, on occurrence of a first type of clock pulse, output their stored bits to memory sites equivalent to 30.

The array 10, of processing cells in Figure 1 may be considered to be made up of a square array of sixteen cells enclosed within the area ABCD plus a triangular array of ten cells within the area ADE. The digits of input numbers $a$ enter the array, 10, across the edge BC whilst the digits of input numbers $b$ enter the array across the edge AB. The digits of $a$ are input to the multiplier in parallel via ports 40, 42, 44 and 46 such that $a_0(n)$ enters at port 46, $a_1(n)$ at port 44, $a_2(n)$ at port 42 and $a_3(n)$ at port 40 where $a_i(n)$=the $i^{th}$ bit of the $n^{th}$ in the series of numbers $a$

The digits of $a(n)$ are then passed down a delay line array, 56, of latches of the same type as memory sites 30, 32, 34, 36 and 38 so that they are input to the cell array, 10, across the edge BC in a staggered manner.

The digits of $b$ are input to the multiplier in parallel via ports 48, 50, 52 and 54 such that $b_0(n)$ enters at port 48, $b_1(n)$ at port 50, $b_2(n)$ at port 52 and $b_3(n)$ at port 54. The digits of $b(n)$ are then passed down a delay line array, 58, of latches so that they are input to array 10 across the edge AB in a staggered manner. The passage of the digits along the delay line arrays is governed by the same clocking means which governs the passage of digits through the array, 10. Only two types of non-overlapping clock pulses are therefore required to control the whole multiplier.

In an alternative form of the Figure 1 processor, delay line arrays equivalent to arrays 56 and 58 are provided on separate chips which are interfaced to a chip carrying the processing cell array, 10.

The values of $s^0(n)$ and $c(n)$ are provided for by programming the multiplier so that $s_0^0(n)$ is latched into site 60 at the same time that $a_0(n)$ arrives at edge BC, $s_1^0(n)$ is latched into site 62 at the same time that $a_1(n)$ arrives at edge BC, $s_2^0(n)$ is latched into site 64 at the same time that $a_2(n)$ arrives at edge BC, $s_3^0(n)$ is latched into site 66 at the same time that $a_3(n)$ arrives at edge BC, $s_4^0(n)$ is latched into site 68 at the same time that $b_1(n)$ arrives at edge AB, $s_5^0(n)$ is latched into site 70 at the same time that $b_2(n)$ arrives at edge AB, $s_6^0(n)$ is latched into site 72 at the same time that $b_3(n)$ arrives at edge AB and $s_7^0(n)$ is latched into site 74 one clock cycle after $s_6^0(n)$ is latched into site 72. Additionally, $c_0(n)$ is latched into site 76, $c_1(n)$ is attached into site 78, $c_2(n)$ is latched into site 80 and $c_3(n)$ is latched into site 82 at the same times that $a_0(n)$, $a_1(n)$, $a_2(n)$ and $a_3(n)$ respectively arrive at edge BC.

The numbers $s^0(n)$ and $c(n)$ may, for example, be numbers carried over from a previous computation (not indicated in Figure 1).

In the embodiment of Figure 1 the multiplier has been set up to calculate

$$s(n)=a(n)\times b(n)$$

ie $s^0(n)=c(n)=0$

The result, $s(n)$, is output across edge CE of array 10 in a staggered manner as illustrated in Figure 1. The least significant bit, $s_0(n)$ emerges at port 84 five pulse cycles after $a(n)$ is input to ports 40—46 and

$s_1(n)$, $s_2(n)$, $s_3(n)$, $s_4(n)$, $s_5(n)$, $s_6(n)$ and $s_7(n)$ emerge at ports 86, 88, 90, 92, 94, 96 and 98 respectively, $s_7(n)$ emerging twelve pulse cycles after $a(n)$ is input.

The triangular array, ADE thus serves to process the 'carry over' bits of $s(n)$. Although only ten processing cells are required for the carry-over section, for simplicity of fabrication, they may be provided by an additional 4×4 cell square array with six of the square array cells redundant.

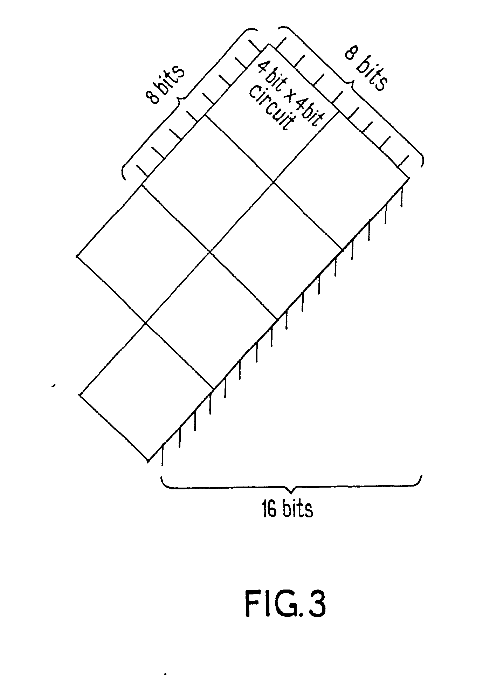

Figure 3 illustrates how the multiplier of Figure 1 may be extended for use in multiplying together two unsigned eight-bit numbers. In the extended multiplier, seven of the basic 4×4 processing cell square arrays are used with three 4×4 arrays for processing the carry-over digits. As in the case of the multiplier of Figure 1, only ten of the cells in two of the three 4×4 carry-over arrays are used, leaving six cells redundant.

The pipelined multiplier of Figure 1 may be adapted for use with signed binary numbers where the sign-magnitude representation is used by addition of an EXCLUSIVE-OR gate for processing the sign bits. The magnitude portion of the numbers may then be processed as in Figure 1.

It can be seen from the above that the multiplier array may be constructed from basic processing cells which are more complex than cell 12. A basic cell may readily be constructed, for example, from four of the cells, 12, with internal latches between the cells removed. This cell would then take in two digits of $a(n)$ and two digits of $b(n)$ in one clock cycle. Alternatively, the logic for the "macrocell" (higher level processing cell) may be designed particularly for dealing with two bits of both $a(n)$ and $b(n)$ for greater efficiency.

More commonly, data words have a number of bits which is divisible by four. A macrocell equivalent to a 4×4 array of cells, 12, may then be used.

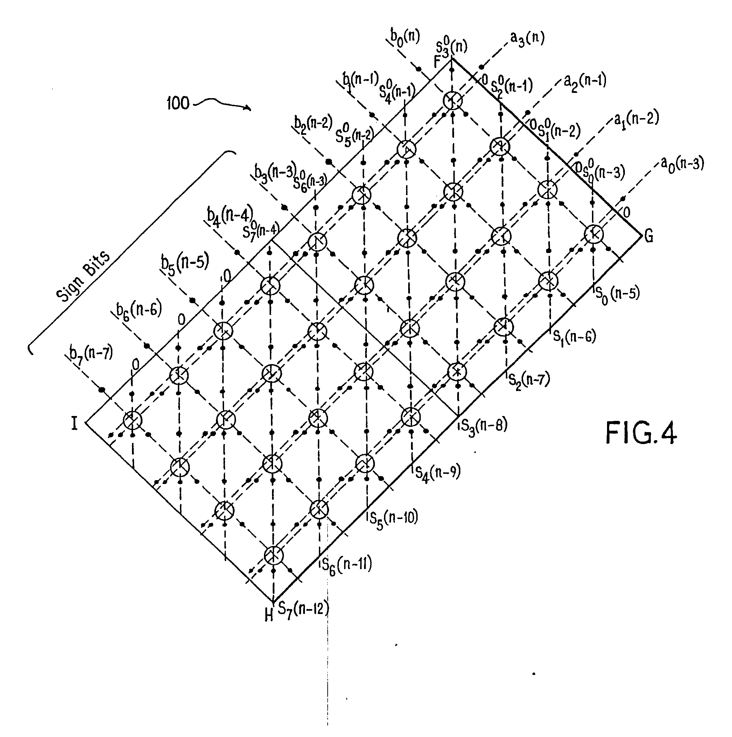

For multiplication of signed binary numbers $a(n)$ and $b(n)$ in four-bit two's complement form ie in the form of a four-bit number in which the sign is incorporated in the number, the pipelined multiplier of Figure 4 may be used.

For a four-bit two's complement number, $x$, the value of $x$ in base ten is given by

$$x = -2^3 x_3 + \tilde{x}$$

where

$$\tilde{x} = 2^2 x_2 + 2x_1 + x_0$$

For application of the circuit of Figure 4, the numbers $a(n)$ and $b(n)$ are first considered in eight-bit two's complement rotation. Any integer in the region $-2^7$ to $2^7 - 1$ may be represented uniquely in this way and, in particular, a four-bit two's complement number takes its original four-bit two's complement form with the sign bit extended into the four most significant places. For $a(n)$ positive, its sign bit is zero and therefore four bits are sufficient to represent it in eight-bit two's complement form.

The product of two four-bit two's complement numbers must be within the range $-2^7$ to $2^7 - 1$. Consequently the entire calculation of $a(n) \times b(n)$ may be carried out in eight-bit two's complement rotation. For $a(n)$ positive the calculation is effected by multiplying the four-bit two's complement form of $a(n)$ by the eight-bit two's complement form of $b(n)$ and ignoring terms in $2^8$ and greater which are generated in the process. The result, $s(n)$, is the product $a(n) \times b(n)$ in eight-bit two's complement form.

In Figure 4 this is performed in the multiplier shown which includes an array, 100, comprising two sixteen-cell square arrays of processing cells identical to the square array ABCD of Figure 1. The digits of $a(n)$ in four-bit two's complement form are input along edge FG of array 100 and the digits of $b(n)$ in eight-bit two's complement form are input along edge FI of the array.

The array of Figure 4 shows the more general case multiplication

$$s(n) = s^0(n) + a(n) \times b(n) + c(n)$$

where
$s^0 =$ a number expressed in eight-bit two's complement form with a value sufficiently low to keep $s(n)$ within eight-bits in two's complement form, and
$c(n) =$ a four-bit two's complement number
$= 0$ in Figure 4.

As in the Figure 1 multiplier, the digits of $a(n)$, $b(n)$ and $s^0(n)$ are input so to move through the multiplier in a staggered manner. Thus, at the time shown in the diagram, the digits $b_0(n)$, $b_1(n-1)$, $b_2(n-2)$, $b_3(n-3)$, $b_4(n-4)$, $b_5(n-5)$, $b_6(n-6)$, $b_7(n-7)$ arrive along edge FI for input simultaneously with the arrival of $a_3(n)$, $a_2(n-1)$, $a_1(n-2)$ and $a_0(n-3)$ along edge FG. This occurs simultaneously with the arrival of $s_0^0(n-3)$, $s_1^0(n-2)$, $s_2^0(n-1)$, $s_3^0(n)$, $s_4^0(n-1)$, $s_5^0(n-2)$, $s_6^0(n-3)$ and $s_7^0(n-4)$ along FG and FI for input. The digits of $s(n)$ are output in a staggered manner along edge GH.

For $a(n)$ negative its eight-bit two's complement notation occupies more than the four least significant bits. A shortened four-bit form may not therefore be used. Instead, the value

$$a(n) = -2^3 a_3(n) + \tilde{a}(n) \text{ is taken}$$

and thus

$$a(n) \times b(n) = \tilde{a}(n) b(n) = a_3(n) 2^3 b(n)$$

By translating $b(n)$ into one's complement notation $a(n) \times b(n)$ becomes

$$2^3 a_3(n)\overline{b}(n) + \widetilde{a}(n)b(n) + a_3(n)2^3 \qquad (1)$$

where $\overline{b}(n)$ is an eight-bit positive integer, each of the bits, $\overline{b}_i(n)$, of which is the complement of the corresponding bit of $b(n)$: ie where

$$b_i(n)=0, \ \overline{b}_i(n)=1$$

and where

$$b_i(n)=1, \ b_i(n)=0$$

The product in equation "(1)" above is evaluated using the pipelined multiplier illustrated in Figure 5.

The multiplier includes an array, 102, consisting of two adjacent sixteen-cell square arrays of identical processing cells, one of which is indicated at 104.

A cell, 104, is shown in more detail in Figure 6.

Input lines 14, 16, 18 and 20 bring data into the cell in the form of bits b, s, a and c respectively in a similar manner to the equivalent lines of Figure 2. Also, in a similar manner, output lines 22, 24, 26 and 28 takes data away from the cell in the form of bits b', s', c' and a' respectively. Additionally, a fifth line, 106, brings a 'd' control input to the cell, 104, such that when

d=0 the value of b remains as b
and when
d=1 the complement of b ie $\overline{b}$ is taken instead of b.

Cell 104 then processes the input data in the same way as cell 12 of Figure 2 using either b or $\overline{b}$ in the calculation according to whether d=0 or 1 respectively.

In the array, 102, of Figure 5, the d lines of the eight cells 104 adjacent to edge JM are all set to '1' in order to supply the first term of equation "(1)" whilst the remaining cells in the array have blank inputs (equivalent to 0) on their d lines, 106, in order to supply the second term of equation "(1)". The value of $a_3$ is input on $c_3$ line 108 so as to supply the third term of equation "(1)". In the type of processor of Figure 5, $c(n)$ is set to zero. The $c_2(n)$, $c_1(n)$ and $c_0(n)$ latches along edge JK are therefore set to 0. Numbers $a(n)$ and $b(n)$ in four-bit and eight-bit two's complement form respectively are then input in a staggered manner along edges JK and JM respectively as shown in the diagram, the result, $s(n)$, being output in staggered manner along edge KL of the array 102.

By inputting d=0 to the eight cells, 104, along edge JM and by inputting $a_3=0$ to line 108 it can be seen that the array for the pipelined multiplier of Figure 5 becomes equivalent to the array for the pipelined multiplier of Figure 4.

The array for the multiplier of Figure 5 is particularly useful compared with prior art multipliers as the correction terms of equation "(1)" are incorporated into the array in one operation without the need for implementing additional operations and processing hardware. In, for example, some forms of prior art multipliers, multiplication of four-bit two's complement numbers $a(n)$ and $b(n)$ is performed using the form

$$a(n) \times b(n) = (-2^3 a_3(n) + \widetilde{a}(n))(-2^3 b_3(n) + \widetilde{b}(n))$$

$$= a(n)\widetilde{b}(n) + 2^6 a_3(n)b_3(n) - 2^3 a_3(n)\widetilde{b}(n) - 2^3 b_3(n)\widetilde{a}(n)$$

ie three correction terms are involved and processed individually.

Although the d input is supplied on every cell in Figure 5, it may alternatively be provided only on the cells along the edge JM. However, to retain the iterative nature of the design the input is preferably supplied on all cells.

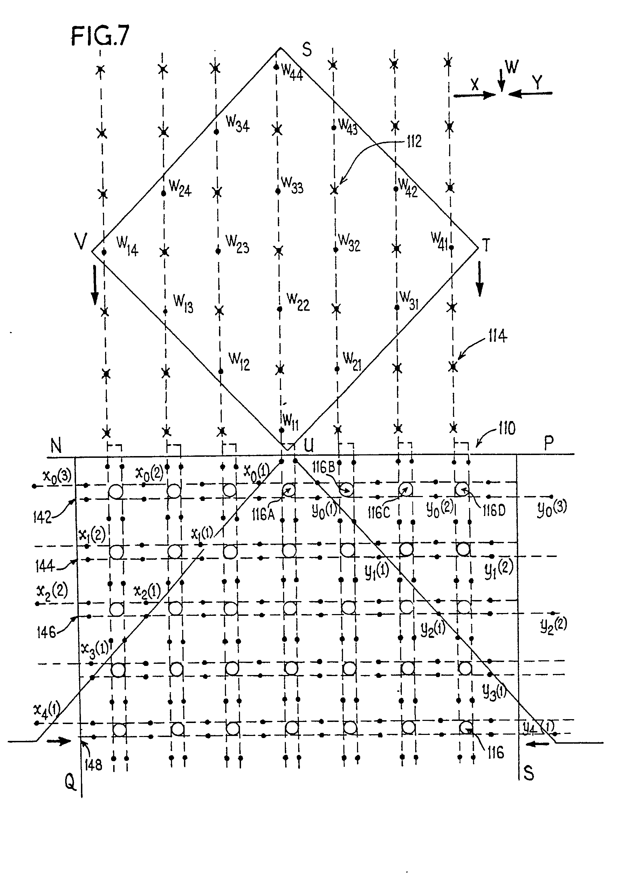

Figure 7 depicts an array of processing cells, 110, in accordance with the invention, for performing a one-bit Walsh transform ie a transform of the type

$$Y = WX + Z$$

where
W=a Walsh transform matrix, the elements, w, of which take the value 1 or −1
Z=a predetermined vector=0 in Figure 7
and
X, Y=vectors representing variable digital numbers $x$ and $y$

The processor of Figure 7 is for use with a 4×4 matrix W and five-bit two's complement numbers $x$ and $y$. Thus the calculation is:

$$Y = WX$$

$$\Rightarrow \quad \begin{pmatrix} y(n) \\ y(n+1) \\ y(n+2) \\ y(n+3) \end{pmatrix} = \begin{pmatrix} w_{11} w_{12} w_{13} w_{14} \\ w_{21} w_{22} w_{23} w_{24} \\ w_{31} w_{32} w_{33} w_{34} \\ w_{41} w_{42} w_{43} w_{44} \end{pmatrix} \begin{pmatrix} x(n) \\ x(n+1) \\ x(n+2) \\ x(n+3). \end{pmatrix}$$

The diagram in Figure 7 illustrates the arrangement of the bits involved in the processing immediately prior to calculation of:

$$\begin{pmatrix} y(1) \\ y(2) \\ y(3) \\ y(4) \end{pmatrix} = W \begin{pmatrix} x(1) \\ x(2) \\ x(3) \\ x(4) \end{pmatrix}$$

The elements of W and $x(1)$, $x(2)$, $x(3)$ and $x(4)$ are input to memory sites as shown ($x(4)$ and some of the digits of $x(3)$ and $x(2)$ are not shown in Figure 7). Since $Z=0$, the memory sites of array 110 labelled as $y_0(1)$, $y_1(1)$, $y_2(1)$, $y_3(1)$, $y_4(1)$, $y_0(2)$, $y_1(2)$, $y_2(2)$ and $y_0(3)$ are initially set to zero, but are labelled with the above $y$ bits for better understanding of the progress of these digits through the processor until they are output across edge NQ in the diagram. For non-zero $Z$, the above $y$ bits would be set accordingly.

Memory sites not containing the elements of $x$, $y$ or W as shown initially contain blank information (equivalent to digital value 0). These sites are indicated by crosses such as 114 in the upper section of Figure 7 above line NP. For clarity, no crosses are shown in the lower section of Figure 7 below NP.

The arrangement of Figure 7 is somewhat simplified in that it implies that the $w_{ij}$ are single bit numbers occupying one conducting line each. However, in order to accommodate blank (0) values as well as 1 and −1, the $w_{ij}$ must take a two bit form, $(u_{ij}, v_{ij})$.

A possible two bit form which may be used (but not the only possible form) is:

| $(u_{ij}, v_{ij})$ | | $w_{ij}$ |
|---|---|---|
| (0, 0) | $\equiv$ | 0 |
| (1, 0) | $\equiv$ | 1 |
| (0, 1) | $\equiv$ | −1 |

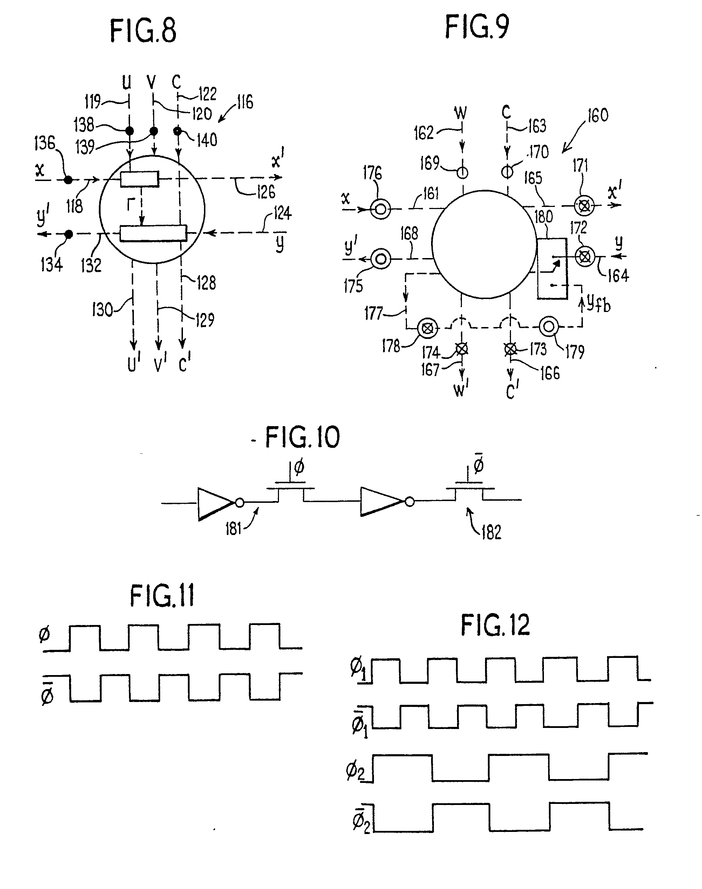

In order to implement this form, the array, 110, of Figure 7 consists of 7×5 identical processing cells such as 116 shown is shown in more detail in Figure 8.

In Figure 8 the cell, 116 has input lines 118, 119, 120, 122 and 124 for bringing input bits x, u, v, c and y respectively and lines 126, 128, 129, 130 and 132 for outputting bits x′, c′, v′, u′ and y′ respectively. Latches 134, 136, 138, 139 and 140 in the form of memory sites, each for storing a single bit are disposed in lines 132, 118, 119, 120 and 122 respectively.

Each cell repeatedly performs a cell operation which calculates:

$$w' \left\{ \begin{array}{l} x'=x \\ u'=u \\ \overline{\phantom{x'=x}} \\ v'=v \end{array} \right\} w$$

$$y'=y \oplus c \oplus r$$
$$c'=(y.c)+(y.r)+(c.r)$$

where
$$r=x.u.\overline{v}+\overline{x}.\overline{u}.v$$

The 'c' input lines along edge NP of array 110 equivalent to line 122 of Figure 8 are connected to the 'v' input line so that when $v_{ij}=1$ (i.e. when $w_{ij}=-1$), 1 is added to the appropriate significant bit of $y$.

The operation of the processor of Figure 7 is controlled by a clocking means (not shown) which, in one clock cycle, outputs a first type of clock pulse which causes each memory site to output its stored bit followed by a second type of clock pulse which causes each memory site to store an incoming bit. For

9

memory sites above the line NP, stored bits or stored blanks pass directly to the adjacent memory site below in one clock cycle whereas, for memory sites below line NP, stored bits or stored blanks pass from each site to an adjacent processing cell with the first type of clock pulse and resulting bits pass from the cell to adjacent memory sites with the second type of clock pulse.

In general, in operation of the processor, the W elements and accompanying blanks move vertically downwards by one processing cell repeat distance per clock cycle, the $X$ elements and adjacent blanks move horizontally to the right by one repeat distance per clock cycle and the $Y$ elements and adjacent blanks move horizontally to the left by one repeat distance per clock cycle.

The operation of the processor may be better understood by considering the sequence of events occurring in four of the cells, 116A, 116B, 116C and 116D.

On occurrence of the initial first clock pulse, $x_0(1)$, $y_0(1)=0$, $c=v_{11}$ and $w=w_{11}=(u_{11}, v_{11})$ are input to cell 116A and, on occurrence of the initial second clock pulse, the following bits are output:

$x'=x_0(1)$ is output to the memory site on cell 116A's output line, 126

$w'=(u', v')=(u_{11}, v_{11})$ is output to the memory sites on cell 116A's output lines 129 and 130

$y'=0\oplus v_{11}\oplus(x_0(1).u_{11}.\bar{v}_{11}+\bar{x}_0(1).\bar{u}_{11}.v_{11})$
$=v_{11}\oplus(x_0(1).u_{11}.\bar{v}_{11}+\bar{x}_0(1).\bar{u}_{11}.v_{11})$

is output to the memory site on cell 116A's output line, 132 and

$c'=(0.v_{11})+(0.(x_0(1).u_{11}.\bar{v}_{11}+\bar{x}_0(1).\bar{u}_{11}.v_{11}))+v_{11}.(x_0(1).u_{11}.\bar{v}_{11}+\bar{x}_0(1).\bar{u}_{11}.v_{11})$
$=v_{11}.(x_0(1).u_{11}.\bar{v}_{11}+\bar{x}_0(1).\bar{u}_{11}.v_{11})$ is output to the memory site on cell 116A's output line, 128.

Simultaneously, cell 116C receives inputs $y_2(2)=0$, $x=0$, $w=(u,v)=0$, $c=v=0$ on its input lines 124, 118, (119, 120) and 122 respectively.

The resulting output bits are $y'=y_0(2)=0$ on line 132 $x'=0$ on line 126, $c'=0$ on line 128, and $w'=(u',v')=0$ on lines 129 and 130.

Simultaneously, cell 116B receives 0 inputs on each of its lines 118, 119, 120, 122 and 124.

Consequently, the cell outputs 0 on each of its output lines 126, 129, 128, 130 and 132. In addition, cell 116D receives 0 inputs on each of its input lines 118, 119, 120, 122 and 124 and outputs 0 on each of its output lines 126, 128, 129, 130 and 132.

At the second clock cycle the following takes place:

On the first type of clock pulse, cells 116A and 116C receive $x=0$, $w=0$ $c=0$, $y=0$ on their input lines 118, 119, 120, 122 and 124 respectively and therefore output $x'=0$, $c'=0$, $w'=0$, $y'=0$ on output lines 126, 128, 129, 130 and 132 respectively on the second type of clock pulse.

Simultaneously, on the first type of clock pulse, cell 116B receives:

$x_0(1)$ on line 118

$w_{21}$ on lines 119 and 120

$c=v_{21}$ on line 122

and

$y_0(2)=0$ on line 124

and, on the second pulse, outputs

$x_0(1)$ on line 126

$c'=(0.v_{21})+(0.(x_0(1).u_{21}.\bar{v}_{21}+\bar{x}_0(1).\bar{u}_{21}.v_{21}))+$
$(v_{21}.(x_0(1).u_{21}.\bar{v}_{21}+\bar{x}_0(1).\bar{u}_{21}.\bar{v}_{21}))$
$=v_{21}.(x_0(1).u_{21}.\bar{v}_{21}+\bar{x}_0(1).\bar{u}_{21}.v_{21})$ on line 128

$w_{21}$ on lines 129 and 130

$y'=0\oplus v_{21}\oplus(x_0(1).u_{21}.\bar{v}_{21}+\bar{x}_0(1).\bar{u}_{21}.v_{21})$
$=v_{21}\oplus(x_0(1).u_{21}.\bar{v}_{21}+\bar{x}_0(1).\bar{u}_{21}.v_{21})$
on line 132

Simultaneously, on the first type of clock pulse, cell 116D receives:

$x=0$ on line 118

$w=0$ on lines 119 and 120

$c=0$ on line 122

and

$y=y_0(3)=$on line 124

and, on the second clock pulse, outputs

$x'=0$ on line 126

$c'=0$ on line 128

$w'=0$ on line 129 and 130

$y'=y_0(3)=)$ on line 132

The first digit to be output from the processor is $y_0(1)$ which emerges at port 142 four clock cycles after the processing begins. $y_1(1)$ then emerges at port 144 after five clock cycles with $y_2(1)$ reaching port 146 and $y_0(2)$ reaching port 142 after six clock cycles etc. The matrix multiplication

$$\begin{pmatrix} y(1) \\ y(2) \\ y(3) \\ y(4) \end{pmatrix} = W \begin{pmatrix} x(1) \\ x(2) \\ x(3) \\ x(4) \end{pmatrix}$$

is completed when $y_4(4)$ reaches port 148 sixteen clock cycles after processing begins.

Although only one matrix, W, is shown in Figure 7 with its digits input to area STUV, in operation of the processor, as the elements of the first matrix, W, descend vertically at each clock cycle, the elements of a second matrix, W, are input to take their places. Equally, after input of the elements of $x(1)$, $x(2)$, $x(3)$ and $x(4)$ along edge NQ and $y(1)$, $y(2)$, $y(3)$, $y(4)=0$ along edge PS, the elements of $x(5)$, $x(6)$, $x(7)$ and $x(8)$ are input in a staggered manner across NQ and $y(5)$, $y(6)$, $y(7)$, $y(8)=0$ across PS. In this way a new matrix multiplication

$$\begin{pmatrix} y(5) \\ y(6) \\ y(7) \\ y(8) \end{pmatrix} = W \begin{pmatrix} x(5) \\ x(6) \\ x(7) \\ x(8) \end{pmatrix}$$

begins on the ninth clock cycle with digits $x_0(5)$, $w_{11}$, $c=v_{11}$ and $y_0(5)=0$ being input to processing cell 116A.

The numbers, $x$, originally take three-bit, two's complement form, but are extended to five-bit two's complement form for simplicity. This may be appreciated by considering that, in three-bit two's complement form, $x$, will lie in the range

$$-2^2 \text{ to } 2^2-1$$
$$\text{ie } -4 \text{ to } {}^+3$$

Additionally, for a four-point transform
$$y(i)=w_{i1}x(n)+w_{i2}x(n+1)+w_{i3}x(n+2)+w_{i4}x(n+3)$$
$$=\pm x(n)\pm x(n+1)\pm x(n+2)\pm x(n+3)$$
Therefore, the maximum value of $y$ is ${}^+12$

$$\text{ie when } w_{i1}=w_{i2}=w_{i3}=w_{i4}=1$$

and the minimum value of $y$ is $-16$

$$\text{ie when } w_{i1}=w_{i2}=w_{i3}=w_{i4}=-1$$

$y$ thus lies within the range $-2^4$ to $2^4-1$ and can therefore be represented in five-bit two's complement form. In common with the pipelined multiplier, a macrocell array may also be used with the Walsh Transform processor.

It can be seen that the Figure 7 processor may be adopted for the less complicated matrix multiplication where the $w_{ij}$ take only the values 0 or 1. In this case the $w_{ij}$ would take their conventional one-bit form. The processor array may then be considered as a 'bit slice' array and several bit slice arrays may be employed for matrix multiplication where the $w_{ij}$ are multi-bit numbers.

Equally, the Walsh transform processor array of Figure 7 may be employed alongside a stack of other similar processor arrays to cater for multi-bit $w_{ij}$ values.

The processing cell for the case where $w_{ij}$ takes the value 0 or 1 would be such that:

$$x'=x \qquad y'=y\oplus(w.x)\oplus c$$
$$w'=w \qquad c'=(w.x).y+(w.x).c+yc$$

It can be seen from Figure 7 that the data processor depicted therein is relatively inefficient in its use of chip space since, at any one time, only half of the processing cells in array 110 are computing a partial product bit which contributes to the sum. This arises due to the movement of the $x$ and $y$ in opposite directions simultaneously.

In an improvement of the Figure 7 processor, the $x$ are made to remain stationary while the $y$ move one processing cell to the left. The $y$ are then made to remain stationary while the $x$ move one processing cell to the right. The result is a reduction in the required number of processing cells.

A processing cell for use in an improved processor is illustrated in Figure 9.

In Figure 9 an improved processing cell, 160, has input lines 161, 162, 163 and 164 for bringing input bits x, w, c and y respectively and output lines 165, 166, 167 and 168 for outputting bits x', c', w' and y' respectively. Latches are also shown associated with cell 160. However, unlike the latches shown in Figures 2, 6, and 8, in Figure 9 each latch is depicted as two half latches. Thus half latches 169, 170, 171, 172, 173, 174, 175 and 176 are disposed in lines 162, 163, 165, 164, 166, 167, 168 and 161 respectively.

In addition to the x, w, c, y, x', w', c', and y' lines, the cell 160 includes a feed back line, 177, in which are disposed two half latches, 178 and 179, and a switch, 180. Line 177 carries a digit, $y_{fb}$, into the cell.

A more detailed picture of the type of latch used in the processing cell, 160, is illustrated in Figure 10.

Figure 10 illustrates a master/slave latch consisting of a master section, 181, and a slave section, 182. The latch is controlled by two square wave clocking waveforms, $\phi$ and $\bar{\phi}$, which are illustrated graphically (voltage vs time) in Figure 11. Passage of data bits through the master section, 181, is governed by the $\phi$ pulses and passage of data bits through the slave section, 182, is governed by the $\bar{\phi}$ pulses.

It can be seen from Figure 10 that the latch may be considered as consisting of a separate master half, 181, and a separate slave half, 182.

Returning to Figure 9, the operation of the processing cell, 160, is governed by four clocking waveforms, $\phi_1$, $\bar{\phi}_1$, $\phi_2$ and $\bar{\phi}_2$, which are illustrated in graphical form in Figure 12. Thus latches 169 and 170 are controlled by $\phi_1$, latches 173 and 174 by $\bar{\phi}_1$, latches 175, 176 and 179 by $\phi_2$ and latches 171, 172 and 178 by $\bar{\phi}_2$. In addition, switch 180 is controlled by $\phi_2$ and $\bar{\phi}_2$ such that, on occurrence of a $\phi_2$ peak, the switch closes to connect feed back line 177 to cell 160 and, on occurrence of a $\bar{\phi}_2$ peak, the switch closes to connect line 164 to the processing cell.

In operation the effect of the four clocking waveforms is to allow passage of w and c bits through the array at twice the rate of the x and y bits. In addition, each x value input to the cell takes part in two processing cell operations before the succeeding x value is input. The y input values are likewise updated at half the frequency of the w and c values. However, in their case, the value y is input to the cell for the first of the two operations and the value $y_{fb}$ is input for the second. It can also be seen from Figure 9 that, since the x half latch, 176, is clocked by $\phi_2$ and the y half latch, 172 is clocked by $\bar{\phi}_2$, the general movement of $x$ rightwards is 180° out of step with the general movement of $y$ leftwards.

The logic operations of cell 160 may be summed up as:

$$x'=x$$
$$w'=w$$
$$y'=\bar{y}\oplus(w.x)\oplus c$$
$$c'=(w.x).\bar{y}+(w.x).c+\bar{y}.c$$

where

$$\bar{y}=y.\bar{\phi}_2+y_{fb}.\phi_2$$

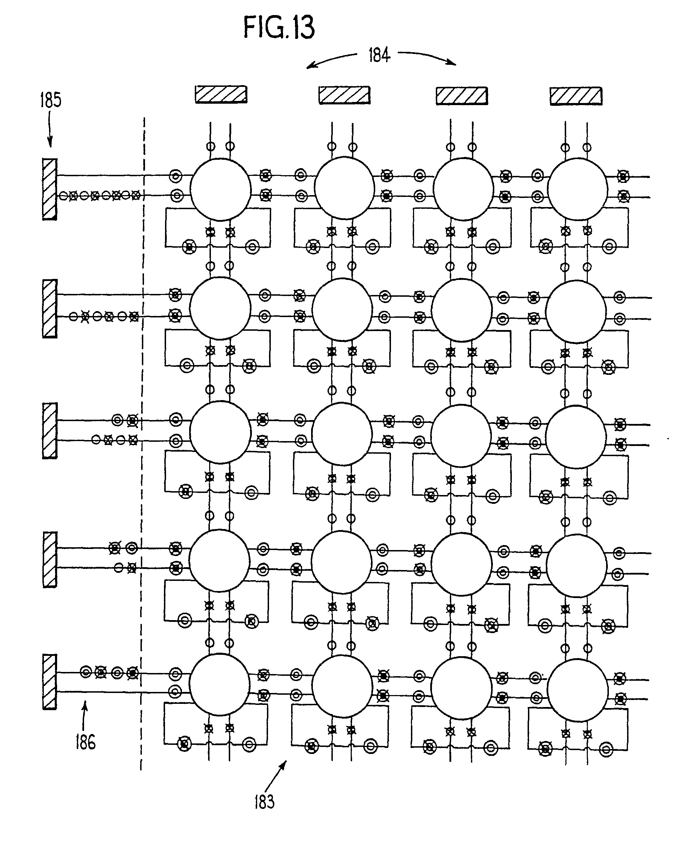

In Figure 13 a data processor having a complete array of cells similar to the processing cell of Figure 9 is shown for calculating.

$$Y=WX$$

where

$X=$a vector representing variable numbers $x$ which are three bits wide, but which have been sign extended to five bits

$Y=$a vector representing resulting five bit wide numbers, $y$

$W=4\times4$ Walsh transform matrix the elements of which represent the values 1 or −1
   or a $4\times4$ bit-slice transform matrix the elements of which represent the values 1 or 0.

In Figure 13 the data processor has an array, 183, consisting of $4\times5$ processing cells of similar nature to the cell 160 of Figure 9.

It is to be noted in Figure 13 that the processing cells in the first (top), third and fifth rows of array 183 are identical to the cell of Figure 9 whereas the cells in the second and fourth rows of array 183 have their x, x', y, y' and $y_{fb}$ lines clocked in anti-phase with the corresponding lines in Figure 9.

Included in the data processor of Figure 13 are input pads, 184, along the upper edge of array 183 for inputting the values of w and along the left-most edge of the array are pads, 185, for inputting the values of x and outputting the values of y. An array of latches, 186, is provided between the pads, 185 and the left hand edge of array 183 in order to provide time skew for the input x bits and time deskew for the output y' bits, allowing the x to be input in parallel and the y to be output in parallel.

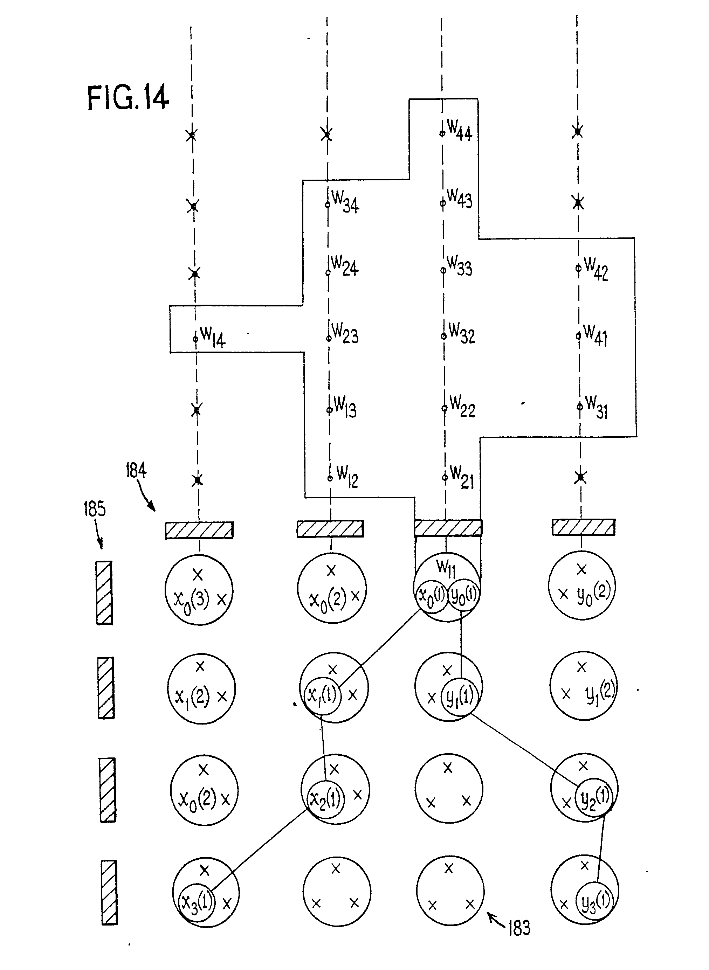

The mode of input of bits w to array 183 is illustrated in Figure 14.

As can be seen from Figure 13, the effect of employing a processing cell as in Figure 9 instead of a processing cell as in Figure 8 is to reduce the $7\times5$ cells (Figure 7) required for a four-point transform to $4\times5$ cells. Consequently, although the Figure 9 cell is more complex than the Figure 8 cell, the final data processor occupies a reduced chip area. In addition, fewer input pads are required in the Figure 13 array than in the Figure 7 array.

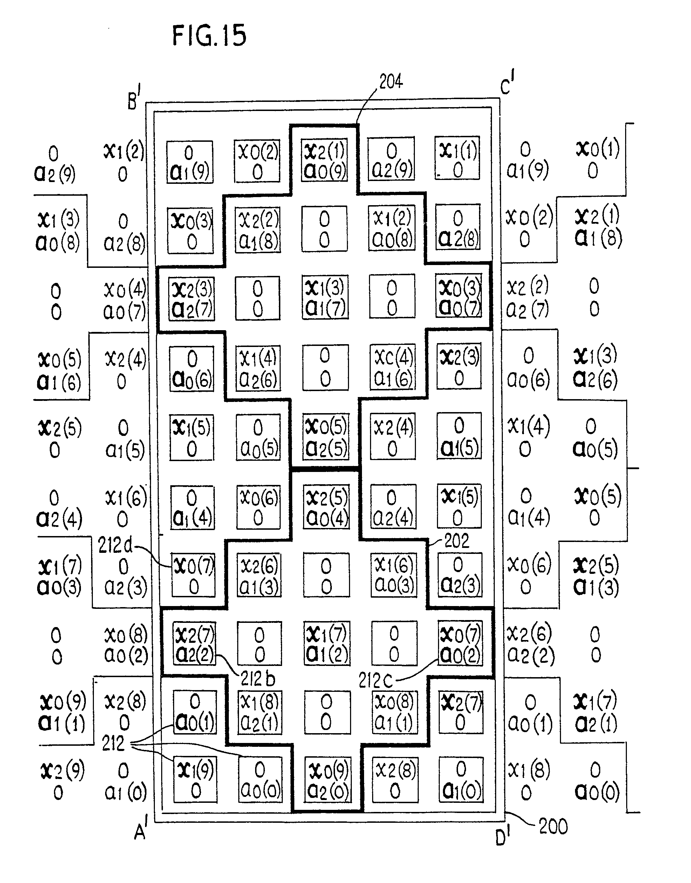

The array of Figure 15 is adapted to carry out the N-point convolution operation:

$$y(n)= \sum_{i=0}^{N-1} a(i)x(n-i) \tag{2}$$

where the $a(i)$ represent a set of positive predetermined coefficient words and the $x(n-i)$ represent a sequence of positive input variables. In Figure 15 it is assumed that the $a$ and $x$ words are three bit wide positive numbers, that N=10 ie a ten point convolution, and that the maximum width of $y$ is five bits.

The array of Figure 15 consists of a square lattice, 200, of 10×5 identical processing cells, 212, interconnected by conducting lines. The array is shown within the rectangle A'B'C'D'.

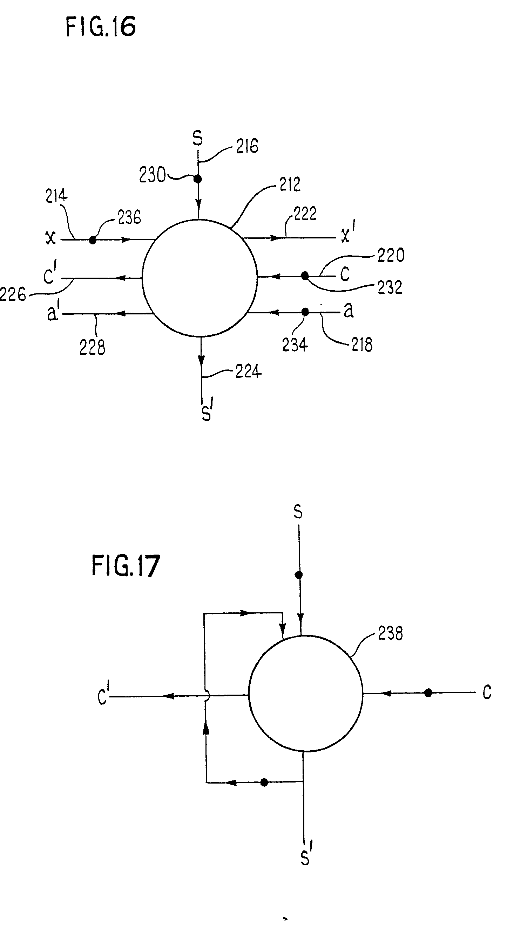

Figure 16 illustrates in detail the operation of a cell, 212.

In Figure 16 a cell, 212, has input lines 214, 216, 218 and 220 for bringing data bits into the cell and output lines 222, 224, 226 and 228 for taking data bits out of the cell. Each line transfers one bit to or from the cell in one cell operation.

The cell, 212, is a gated full adder which operates such that for bits a, c, s and x input on lines 218, 220, 216 and 214 respectively, and bits a', c', s' and x' output on lines 228, 226, 224 and 222 respectively.

$$a'=a$$
$$x'=x$$
$$c'=(a.x).s+(a.x).c+s.c$$

and

$$s'=s\oplus(a.x)\oplus c$$

Latches in the form of memory sites 230, 232, 234 and 236, each for storing a single bit, are disposed in lines 216, 220, 218 and 214 respectively.

The operation of each of the cells 212 is governed by a clocking means consisting of two clocks (not shown in the diagram) which output clock pulses such that a first pulse causes each memory site to output its contents into the adjoining line in the directions shown in Figure 16 and a second pulse causes each memory site to store a resulting incoming bit. Thus, on a first type of clock pulse, sites 230, 232, 234 and 236 output their contents to processing cell 212 so that the cell operation may be performed on these bits.

The movement of variables $x$ and coefficient words $a$ through array 200 is illustrated in Figure 15 which gives a simple geometric picture of the positions of the bits of $a$ and $x$ at an instant in time.

The particular time illustrated in Figure 15 is the time at which the calculation of $y(9)$ and $y(10)$ is taking place.

For simplicity, cells 212 in array 200 are indicated by square boxes and the interconnecting conducting lines and associated memory sites have been omitted.

Array 200 consists of ten rows of five cells, 212. In operation the value of s input to the first (top) row of cells along edge B'C' is initialised to zero and the value of c input to the fifth (right-most) column of cells along edge C'D' is also made zero. The array is therefore arranged to constantly input the value zero to these cells on each clock cycle.

In order to indicate more clearly how the $x$ and $a$ interact within array 200, the bits of $x$ and $a$ which are input on even clock cycles are shown in italic lettering whilst those input on odd clock cycles are shown in normal lettering.

In practice, it will be appreciated that only the values of $x$ and $a$ shown within array 200 denote real electrical signals. The values shown outside the bounds of array 200 are shown merely for ease of understanding the arrangement of the bits input to the array.

It can be seen from Figure 15 that the bits of $x$ and $a$ which make up a single word are input alternately with zeros and that the $x$ bits may be generally considered to form rightward-leaning parallelograms whilst the bits of $a$ may be generally considered to form leftward-leaning parallelograms. In the case of the words, $x$, the least significant bit of each word enters array 200 first from the left followed two clock cycles later by the next least significant bit etc. Conversely the most significant bit of each word, $a$, enters array 200 first from the right, followed two clock cycles later by the next most significant bit, etc.

It is to be noted in Figure 15 that, although bits of $x$ and $a$ which belong to the same word are input to the array interspersed by zeros, the least significant bit of a variable $x$ is input to the array after the most significant bit of a preceding variable is input on the clock cycle directly following. No zero therefore separates the least significant bit of an input variable and the most significant bit of the preceding variable. Likewise, no zero separates the most significant bit of a coefficient word $a$ and the least significant bit of the preceding coefficient word.

By analysing Figure 15 it can be seen that the processing cells within array 200 which produce non-zero products when performing their logic operations are confined to two diamond-shaped regions, 202 and 204, within the array. In the remaining triangular regions outside areas 202 and 204 either a=0 or x=0 therefore the partial products, s, are not supplemented in these regions.

Region 202 in Figure 15 is associated with the calculation of $y(9)$ and region 204 is associated with the calculation of $y(10)$.

In performing the convolution operation the diamond-shaped interaction regions 202 and 204 move vertically down through array 200 as the $x$ and the $a$ move rightwards and leftwards respectively. The final values of $y$ are therefore produced by accumulating the values of the partial products, s', which are output along edge A'D'. In order to do this a row of five cells of the type shown in Figure 17 is provided below edge A'D'.

The cell of Figure 17 is a full adder, 238, having inputs c and s, the value of s being the same as the value of s' output from a vertically neighbouring cell, 212, adjacent to edge A'D'. Cell 238 outputs its own partial product, s', and a carry bit, c', this value of s' then being fed back to the input of the cell to be used in the subsequent full adder operation.

It can be seen from Figure 15 that the least significant bits of $y(10)$ start to accumulate below edge A'D' before the most significant bits of $y(9)$ have finished accumulating. The least significant bits of $y(9)$ must therefore be removed from the processor before the most significant bits have been completed in order to avoid overlap with $y(10)$.

Figure 15 shows that the bits of $x$ and $a$ pass along the rows of processing cells in array 200 cyclically. Thus, for example, after $a_2(2)$ has emerged from the eighth row along edge A'B' of array 200 following processing by cell numbered 212$b$ in Figure 15, it must on the next clock cycle be input across edge C'D' to cell numbered 212$c$ of the eighth row in Figure 15.

The bits of the $x$ variables effectively wind their way up the array. Thus, at the time shown in Figure 15 $x_0(7)$ is involved in an algebraic operation in both cell 212$c$ on the eighth row and cell 212$d$ on the seventh row.

Overall, a result, $y$, accumulates along edge A'D' every seven clock cycles. In general, for $x$ and $a$ both I bits wide a result, $y$, is accumulated every $2I-1$ clock cycles.

The example of Figure 15 is a simplification of a real convolution processor. In general, for $x$ and $a$ both of I bits wide and N having a reasonable value, the maximum width of $y$ would be more than $2I-1$ bits. In order to accommodate this greater width of $y$, extra half adder cells are required along edge A'B' in order to deal with the maximum word width of the accumulating product, $y$, in any particular row. The number of full adder cells, 238, provided along edge A'D' must also be increased. Alternatively, in order to accommodate the full width of $y$ at any particular stage without overflow, the words $x$ and $a$ may be extended to a width equal to the maximum width of $y$. In the example of Figure 15, the number of cells in array 200 would be increased accordingly.

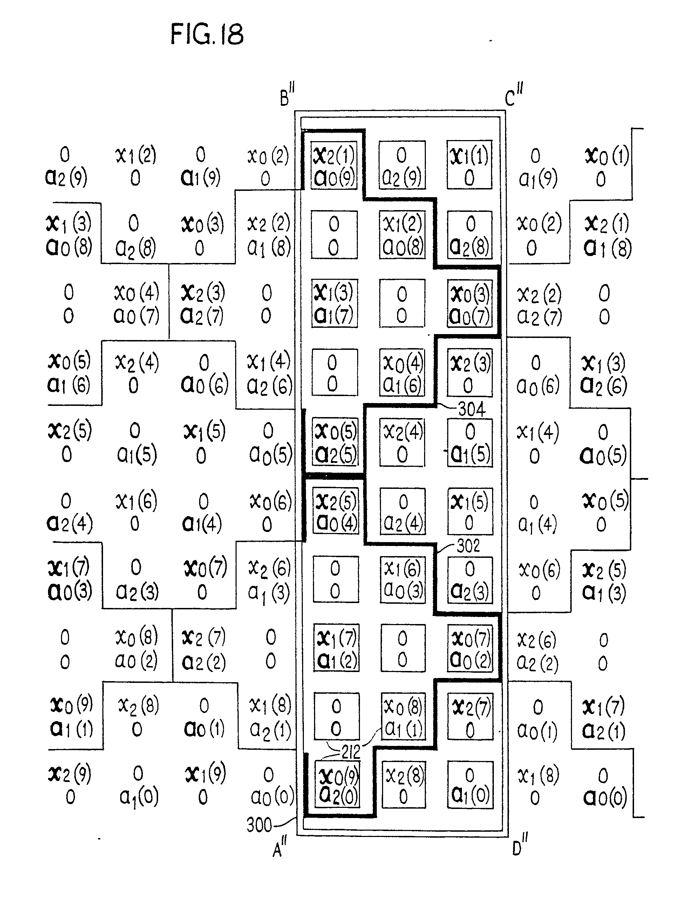

The processor of Figure 15 may be adapted to deal with non-positive $x$ and $a$ by expressing both the variables, $x$, and the coefficient words, $a$, in two's complement form and extending their word widths to the maximum width of any $y$ before inputting them to the array. A processor as illustrated in Figure 18 may then be used to perform the convolution operation.

Figure 18 illustrates the example of a ten point convolution equivalent to that of equation '(2)' above where the maximum width of $y$ is taken to be three bits. The $x$ and $a$ are therefore expressed in three bit, two's complement form. Since the maximum width of $y$ is three bits, any bits of four or more may be ignored. The result is an array, 300, of 10×3 processing cells, 212, each identical to cell 212 of Figure 16. Regions within array 300 which produce non-zero results are indicated by triangular regions 302 and 304. At the instant shown in Figure 18, region 302 is involved in calculation of $y(9)$ and region 304 is involved in calculation of $y(10)$.

As with the convolver of Figure 15, instead of extending the widths of $x$ and $a$, an alternative method of accommodating the full width of any $y$ is by providing extra cells to the left of array 300 according to the maximum width of $y$ in any row of the array.

In the array of Figure 18 $y(9)$ finishes accumulating at the bottom of array 300 completely before $y(10)$ begins to accumulate. No problem with possible overlap therefore arises and the bits of $y(9)$ may therefore all be collected off the array in parallel after the most significant bit has accumulated.

In the example shown in Figure 18 a value of $y$ accumulates every five clock cycles.

As in the Figure 15 processor, the bits of $x$ and $a$ more cyclically through the processing cells of array 300 of Figure 18. Taking the edges of array 300 to be defined by A''B''C''D'' and the width of words $x$ and $a$ to be I bits, in general for a processor of the type shown in Figure 18, it can be seen that a bit of a coefficient word $a$ which emerges from the array along A''B'' is again input to the same row across edge C''D'' $I-1$ clock cycles later. Similarly, a bit of a variable $x$ which emerges from the array across C''D'' is again input across edge A''B'' to the next higher row $I-2$ clock cycles later. The bits of a word $a$ therefore move cyclically within a particular row whilst the bits of the words $x$ spiral up the array.

The necessary delays of $I-1$ and $I-2$ clock cycles may be provided by clocking the bits of $a$ and $x$ respectively back through $I-1$ and $I-2$ latches before again introducing them into the array. From this it can be seen that, although ten input pins are required along C''D'' to input the bits of coefficient words $a$, only one input pin is required at the bottom of A''B'' to input all bits of every $x$.

The processor of Figure 18 may be modified for use in adaptive filtering by allowing for the input pins along C''D'' to be disabled at an appropriate time to input new values of $a$.

A further development of the convolver arrays of Figures 15 and 18 involves the truncation of the arrays. In most practical instances accuracy down to the lowest possible significant bit of $y$ (ie the value of $2^0$) is not necessary, accuracy down to $2^k$ being sufficient (where k>0). This means that the k right hand-most columns of arrays 200 and 300 may be omitted. It must be remembered, however, that, although the processing cells may be removed from the array, the timing delays incurred in these cells must be retained in order for the array to function correctly.

A truncated array is illustrated in Figure 19.

In Figure 19, the array, 400, of cells is for a five point convolution in which the $a$ and $x$ words take two's complement form and are sign extended to four bits wide which is the full range of the result. The results, $y$, have been truncated by removing the right hand-most column of cells.

By removing a column of cells in this way several partial products are removed from the values of $y$. A constant term must therefore be added to each $y$ to compensate.

In comparison with the Figure 18 array in which bits of $x$ require a $I-2$ clock cycle delay and bits of $a$ require a $I-1$ clock cycle delay before re-entering the processing cell array, 300, in Figure 19 the corresponding delays are $I'$ and $I'+1$.

where

$I'$=the truncated width of the processor array (measured in numbers of processing cells)
$=3$

The $I'$ clock cycle delays are thus provided by adding an extra latch, 402, to each processing cell, 412, and the $I'+1$ clock cycle delays are provided by adding an extra latch, 404, to each cell in addition to a supplemental latch, 406, at the right hand side of each row of cells. The bits of $x$ and $a$ are then clocked back through these latches after leaving the array before re-entering again.

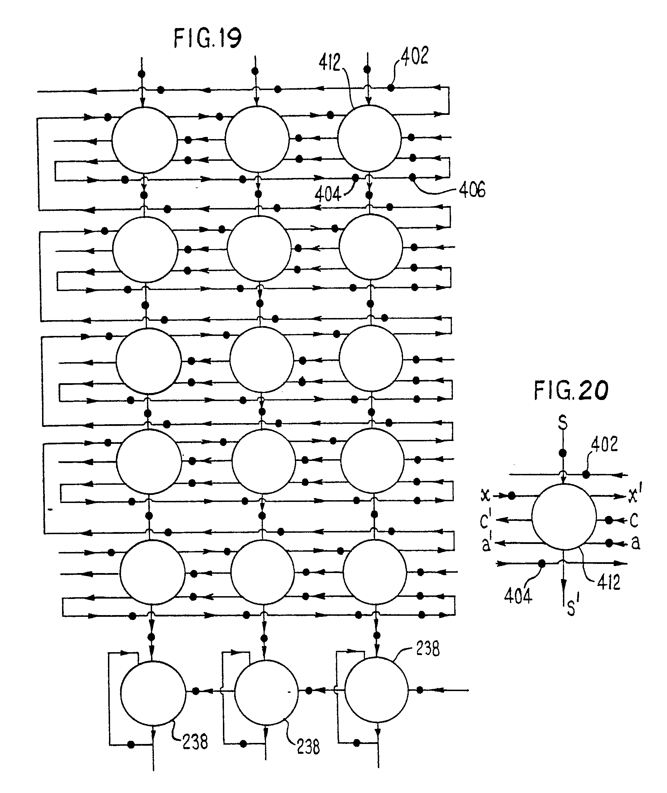

Figure 20 shows the processing cell, 412, of Figure 19 in more detail.

The array of Figure 19 is also accompanied by a row of full adder cells, 238, identical to the cell of Figure 17 for accumulating the results, $y$, at the bottom of the array.

By using the arrangement of Figure 19 the array remains fully repetitive, it being possible to add the extra latches, 406, externally to preserve the symmetry of the remaining elements.

The concept of catering for the sign of $y$ by extending the two's complement numbers $x$ and $a$ to the full width of $y$ before inputting them to the array (as in Figure 18) may be thought of as 'explicit' sign extension.

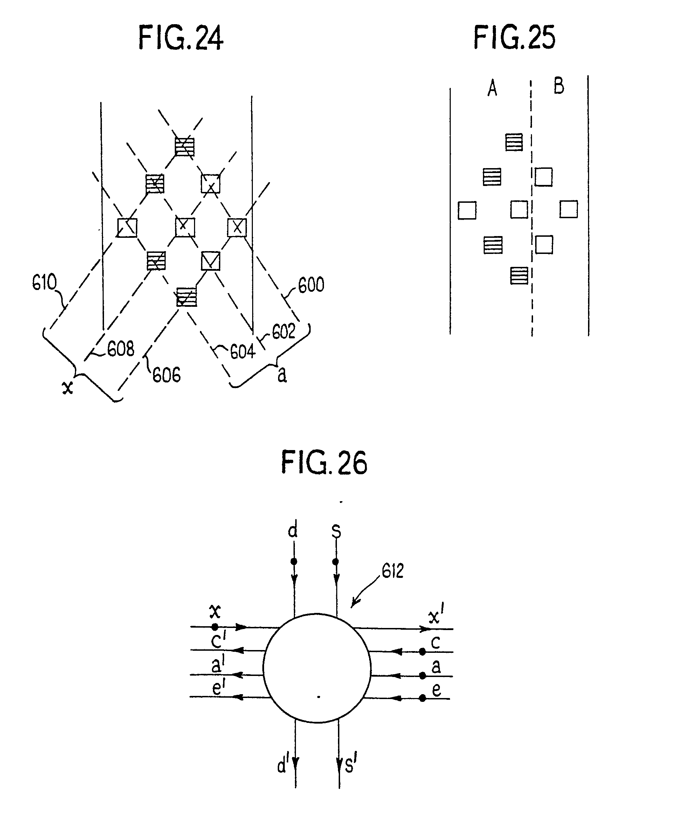

What may be termed as 'implicit' sign extension may also be used. This is illustrated with respect to Figure 24 which depicts in a very simplified form an instantaneous picture of the interaction of variables, $x$ with coefficients $a$ in part of a convolution operation similar to that illustrated in Figure 15. For simplicity only those cells at which the $a$ and $x$ do not take a zero value are shown in Figure 24.

By referring to Figure 15 it can be seen that the bits of coefficient words $a$ which lie on line 600 of Figure 24 are least significant bits of the $a$, the bits on line 602 are next least significant bits and the bits on line 604 are most significant bits. Similarly, the bits of the $x$ which lie on line 606 are least significant bits, the bits on line 608 are next least significant bits and the bits on line 610 are most significant bits.

If the $x$ and $a$ take the form of a three-bit two's complement numbers it can be seen that at the processing cells shown shaded in Figure 24 a sign (most significant) bit meets a non-sign bit whilst at the remaining cells either a sign bit meets a sign bit or a non-sign bit meets a non-sign bit.

Bearing Figure 24 in mind it can be seen that the processing cell array can be split into two regions having different types of cells. These regions are illustrated as regions A and B in Figure 25. For a processing cell array as illustrated in Figure 25 to be able to perform a convolution operation, the shaded cells in region A must be able to distinguish between:

(i) a coincidence of 1's and
(ii) a coincidence of 0's or a 1 and a 0.

In the case of "(i)", the processing of the digits gives rise to a $-1$ which must be summed into the result (with a weighting appropriate to the horizontal position of the cell within the array) whilst in the case of "(ii)" no such $-1$ results.

A processing cell, 612, suitable for inclusion in region A is illustrated in Figure 26.

The logic operations occurring in cell 612 are characterised by

$x'=x$
$a'=a$
$d'=d$
$s'=(c+e)\oplus(a.x)\oplus s$
$c'=\overline{d}.a.x.(c+s.\overline{e})+\overline{a}.\overline{x}.s.c$
$e'=(\overline{a.x.s}.e)+d.a.x.(\overline{s}.\overline{c}+s.e)$

The cell can be considered as equivalent to cell 212 of Figure 16 except that a control line (the 'd' input) is additionally included such that when d=1, a coincidence of x and a digits equal to 1 results in the generation of an e' digit equal to 1. Conversely, when d=0, a coincidence of x and a digits equal to 1 results in the generation of an e' digit equal to 0.

To ensure that the d=1 and d=0 inputs arrive at the correct cells at the correct time the inputs to the control line must be controlled from the top of the array. Thus in the left-most column of cells in region A of Figure 25 the d input to the top cell of the column is conveniently perpetually set to 0 as there are no shaded cells in this column. In the centre column of cells in region A the d input is conveniently set to 1 at all times. In the right-most column of cells in region A of Figure 25 the d input is conveniently set to 1 according to the following format:

$1^{st}$ clock cycle: d=1
$2^{nd}$ clock cycle: d=0
$3^{rd}$ clock cycle: d=0
$4^{th}$ clock cycle: d=0
$5^{th}$ clock cycle: d=1
$6^{th}$ clock cycle=$1^{st}$ clock cycle etc.

15

Additionally the e inputs to the right-most column of cells are perpetually set to 0.

The processing cells of region B of Figure 25 are made up of cells equivalent to cell 212 of Figure 16.

As in the case of the Figure 15 processing cell array, extra half adder cells for accommodating word growth of $y$ may be included to the left of region A and truncation of the B region is possible if the least significant bits of $y$ are not required.

The above ideas are not confined to the convolution operation. The convolution arrays may, for example, be straightforwardly adapted to perform a correlation operation ie to perform the calculation:

$$y(n) = \sum_{i=0}^{N-1} a(i)x(n+i) \qquad (3)$$

Thus for a correlation operation in which $a(i)$ lies in the range $a(0)$ to $a(9)$ the correlation array is the same as that of Figure 17 except that $a(0)$ is input to the first (top-most) row, $a(1)$ to the second row etc instead of $a(0)$ being input to the tenth (bottom-most) row, $a(1)$ to the ninth row etc as in the convolution array of Figure 18.

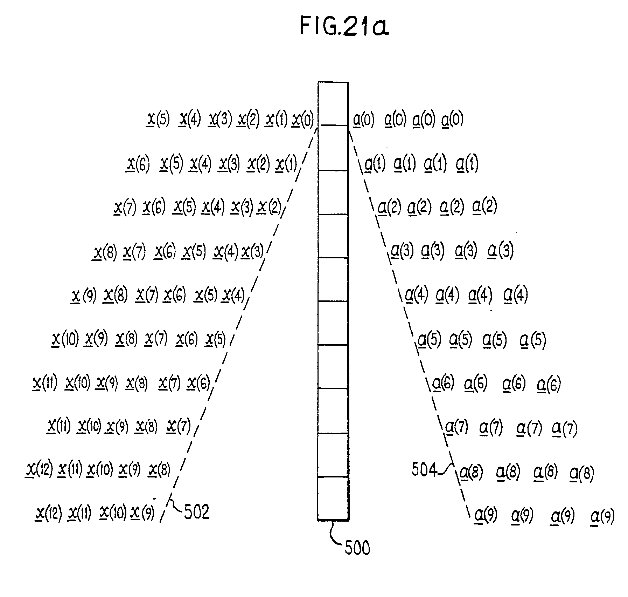

The arrangement of variable and coefficient words with respect to a correlation array is illustrated in Figure 21(a).

In Figure 21(a) an array, 500, is indicated schematically by a column of boxes. Each boxy represents a row of processing cells equivalent ao a row of cells in Figure 18. The arrangement of variables, $x$, and coefficient words, $a$, needed for the correlation operation to take place is indicated at 502 and 504 respectively.

As in the Figure 18 embodiment, each $x$ and each $a$ is input in a bit serial fashion with zeros separating the bits of each word, but with no zeros separating the bits of successive words. It will also be appreciated that the repetition of values of $x$ and $a$ is effected by recycling these words as in the Figure 18 embodiment.

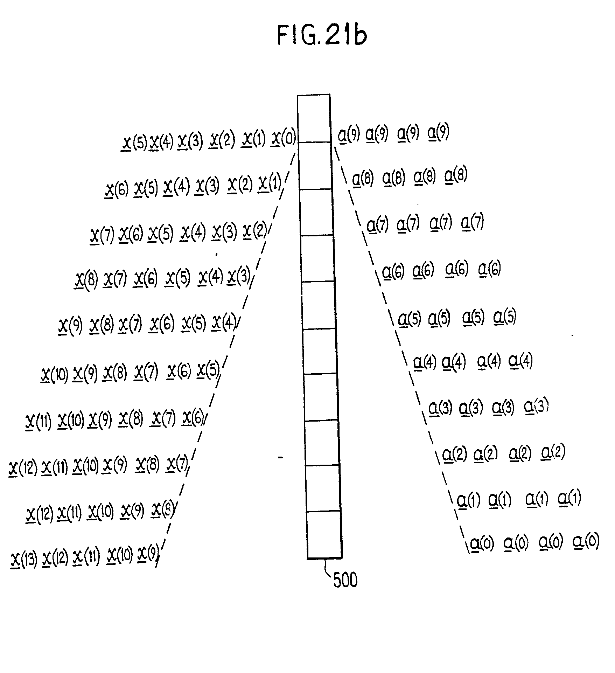

For comparison, Figure 21(b) illustrates the equivalent word level diagram for the convolution processor of Figure 18.

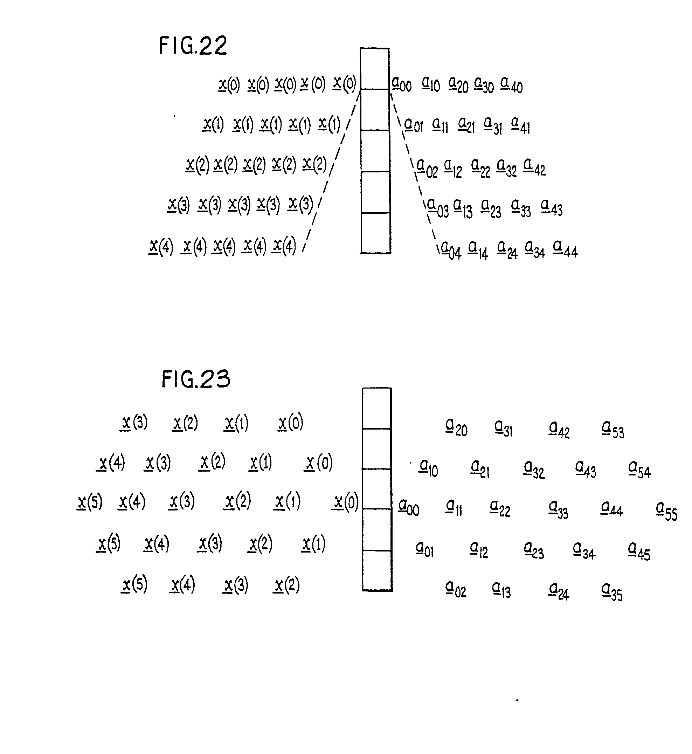

The above ideas may also be extended in matrix-vector multiplication as illustrated in Figure 22.

Figure 22 illustrates at word level in a similar manner to Figure 21 the arrangement of multi-bit variables, $x$, and coefficient words $a$ for carrying out the matrix-vector multiplication.

$$\begin{pmatrix} a_{00} & a_{01} & a_{02} & a_{03} & a_{04} \\ a_{10} & a_{11} & a_{12} & a_{13} & a_{14} \\ a_{20} & a_{21} & a_{22} & a_{23} & a_{24} \\ a_{30} & a_{31} & a_{32} & a_{33} & a_{34} \\ a_{40} & a_{41} & a_{42} & a_{43} & a_{44} \end{pmatrix} \begin{pmatrix} x(0) \\ x(1) \\ x(2) \\ x(3) \\ x(4) \end{pmatrix} = \begin{pmatrix} y(0) \\ y(1) \\ y(2) \\ y(3) \\ y(4) \end{pmatrix}$$

For the above case of a 5×5 matrix it can be seen that an $x$ variable is repeated within any row five times to complete the calculation. In practice this would be achieved by recycling the $x$ words.

Figure 23 depicts in a similar manner to Figure 22 the word level arrangement of variables, $x$, and coefficient words, $a$, for carrying out the banded matrix-vector multiplication.

$$\begin{pmatrix} a_{00} & a_{01} & a_{02} & & & & \\ & & & 0 & & & \\ a_{10} & a_{11} & a_{12} & a_{13} & & & \\ a_{20} & a_{21} & a_{22} & a_{23} & a_{24} & & \\ & a_{31} & a_{32} & a_{33} & a_{34} & a_{35} & \\ & & a_{42} & a_{43} & a_{44} & a_{45} & \\ 0 & & & & & & \\ & & & a_{53} & a_{54} & a_{55} \end{pmatrix} \begin{pmatrix} x(0) \\ x(1) \\ x(2) \\ x(3) \\ x(4) \\ x(5) \end{pmatrix} = \begin{pmatrix} y(0) \\ y(1) \\ y(2) \\ y(3) \\ y(4) \\ y(5) \end{pmatrix}$$

A ten point and a five point convolution have been illustrated above. These numbers may, however, be varied according to the particular requirement. Similarly, the matrix-vector multiplication processors may be expanded or contracted according to whether the matrix is bigger or smaller than those illustrated with reference to Figures 22 or 23.

In the processor of Figure 19, truncation by one bit was illustrated. In general, however, truncation by more than one bit may be adapted provided that a corresponding correction term is added to the resulting $y$ and provided that delay latches are included in order to preserve the integrity of the timing.

From the foregoing it can be seen that, in general, the invention allows the fabrication of processors with regular, repetitive designs. In applications of the invention to, for instance, processors consisting of an array of identical processing cells, the design problem is restricted to the design of a single processing cell. Having proven a single cell, the whole array of identical cells is ince the array consists merely of single cells connected to immediate neighbouring cells.

The iterative property of the design is advantageous in allowing processors able to deal with more bits per number to be made. The processors are enlarged merely by adding more processing cells to the array and this can be done without cost to the speed of operation of the processors. These advantages are particularly important in LSI and VLSI where the number of hardware components involved rapidly becomes unmanageable for less systematic designs.

Considering the simple pipelined multiplier of Figure 1 for example, this may be expanded to allow multiplication of $a(n)$ (I bits per word) by $b(n)$ (m bits per word) by providing a rectangular array of I×m processing cells adjoined to a triangular array of $1/2(I+1)$ cells.

More commonly, data words have a number of bits which is divisible by four, thus allowing the sixteen cell square array to become a unit array which may be used as a basic building block. In addition the larger building block may be constructed with all internal latches removed so as to effectively form a new unit processing cell.

The two's complement pipelined multiplier of Figure 5 is particularly useful in that the design allows larger processors to be built up easily merely by adding on further cells and ensuring a d=1 input along the array edge across which the $b(n)$ digits cross. In prior art two's complement multipliers additional circuits are incorporated to allow correction terms to be processed therefore preventing simple adjoining of basic modules without reprogramming for fabrication of a larger multiplier.

Although the latency of the inventive processors (ie the nett number of clock cycles required between input of data and output of a complete answer) is relatively high (for example, the latency of the pipelined multiplier of Figure 1 is twelve), for data processors which repeatedly carry out the same operation, this disadvantage is offset by the fact that the pipelining allows input of a data word at each clock cycle or at every second clock cycle according to the type of processor. The final clock rate is a function of the delay in processing one batch of data bits in a processing cell only and the maximum rate attainable is equal to the processing cell delay. The inventive design allows this delay to be made very small.

The inventive processor design promotes high frequency processing since, in one clock cycle, data is passed only as far as the nearest latch—a distance which can be made very small, particularly in VLSI. Transmission of data over long connecting lines and resulting time delays, especially the long delays resulting when transmission line effects come into play, are, therefore, avoided. The associated problems of introducing stray capacitance when using extensive data transmission lines are also avoided thereby eliminating the need for large drivers to broadcast the data across the chip. Equally alleviated are the difficulties concerning power dissipation of large drivers and the drivers themselves both taking up large amounts of chip area and introducing further driver chain time delays. In the inventive design the necessary driving is effectively incorporated into the latching circuits, thereby giving a distributed power consumption.

By using the inventive design, synchronisation of timing is readily achieved as the processing cells are of simple design and data is transmitted to neighbouring cells only. Additionally, propagation delays are made independent of data word size unlike, for example, prior art pipelined and ripple-through processors in which one processing step includes the broadcasting of a bit of $b(n)$ to each bit of $a(n)$ before the processing step is complete.

A further advantage of the inventive design is that, by avoiding driving problems, the size of the processor is not limited by data word size.

A still further advantage of the inventive design is the economy in chip area used as a result of inter-connections running between immediately neighbouring processing cells only.

The control of the inventive processor is additionally relatively simple since very few types of clock signals are required for controlling the latches.

The inventive processor may be considered as consisting of successive pipeline stages. The timing constraints for the inventive processor are therefore, firstly, that the timing line path lengths should be arranged so that pulses within any given stage are synchronised, and, secondly, that the delays between adjacent stages are such that, when a first stage is outputting bits to a neighbouring stage, the neighbouring stage comes under the influence of a timing pulse controlling storage of data and not a timing pulse which controls output of data. If the neighbouring stage were under the influence of a timing pulse controlling output of data, the data would pass through the neighbouring stage without being latched into the memory sites. Complete synchronisation between stages is therefore not necessary, a degree of delay being tolerable.

As a modification of the inventive design, multiplexing of data words may be employed so as to economise on the number of input and output pins required in a single chip processor although this may decrease the overall speed of the processor.

A further modification of the inventive design involves inclusion of a degree of fault tolerance. The regularity of the design makes this particularly simple. For example, if a particular processing cell is found to be malfunctioning, the row and column containing the cell may be made redundant and a means of by-passing cells incorporated into the cell design so as to avoid use of the cells on the row and column. The by-pass connections may be activated using, for example, a form of matrix address control or may be activated using burning of on-chip links by means of, for instance, current pulse or laser techniques.

In a more general architecture a chip incorporating the inventive design may take the form of an uncommitted cell array, the necessary circuit connections for the required array being formed in a subsequent metallisation process. The invention is particularly suited to this type of design since many applications require similar cells. The possible variations are therefore readily accommodated on the chip for later wiring. Additionally, due to the regularity of the architecture, laying of subsequent metallisations is relatively uncomplicated.

The inventive design may operate at a sufficiently high frequency to enable use of dynamic latches and, therefore, be particularly suited for the use of MOS technology. By using dynamic in contrast to the more bulky static latches, a minimum of chip area is therefore occupied by latches. Additionally, the increased design problems associated with MOS (eg the need for good impedance matching and good synchronisation in opening and closing of transmission gates so as to prevent back-flow of charge) and the concomitant complex testing and simulation of the circuits required during design are alleviated as a result of the regularity of the architecture. The additional difficulty arising from the need to minimise stray capacity in order to minimise required driving power is also alleviated due to the minimum of interconnecting lines in the inventive design.

## Claims

1. A digital data processor comprising:—

(a) an array (110) of bit-level arithmetic logic cells (116) arranged in rows and columns, each cell (116) being arranged to receive input multiplicand, carry and cumulative sum bits and generate output carry and cumulative sum bits in accordance with its logic operation,

(b) cell interconnection lines (118 to 132) arranged for bit propagation through the array (110), the lines (118 to 132) including clock-activated storing means (134 to 140) for bit storage and advance,

(c) clocking means for control of array operation, the clocking means being arranged to activate the storing means (134 to 140) appropriately to synchronise input of successive combinations of bits to each cell (116) and to cascade generation of cumulative sums along cell interconnection lines (132), and

(d) array outputs (142 to 148) connected to respective cells (116) appropriate to provide cumulative sums resulting from cell logic operations cascaded through the array (110); characterised in that:—

(i) the cell interconnection lines (118 to 132) connect nearest row and column neighbour cells (116) only and provide routes for all bit propagation through the array (110), and

(ii) the array is connected to clock-activated input means (114) arranged to provide multiplicand input bits with relative delays appropriate in combination with those of the storing means (134 to 140) to provide for cumulative sum accumulation in cascade along cell interconnection lines (132).

2. A digital data processor according to Claim 1 characterised in that each storing means (134 to 140) comprises two independently activatable half latches (181, 182) in series and the clocking means is arranged to activate the half latches (181, 182) alternately to effect bit input and output.

3. A digital data processor according to Claim 2 characterised in that each logic cell (160) is arranged to receive two input multiplicand bits.

4. A digital data processor according to Claim 3 characterised in that the processor (110) is arranged to receive bit-parallel multiplicands and each cell (160) is arranged to output carry bits to a respective neighbouring cell (160).

5. A digital data processor according to Claim 1 characterised in that the array (110) is arranged to multiply a vector by a matrix having coefficients equal to 1 or 0 and the input means (114) includes an array of clock-activated storing means (114) arranged for input of successive matrix diagonals to a first array edge.

6. A digital data processor according to Claim 6 characterised in that the array (110) is one of an assembly of j arrays (110), where j is a positive integer at least equal to 2, and characterised also in that the arrays (110) have input means arranged to furnish the kth processor (110) with a respective matrix having one bit coefficients consisting of and arranged in that matrix as individual bits (k−1)th in order of bit significance taken from multi-bit elements of a further matrix where k=1 to j.

7. A digital data processor according to Claim 1 or 4 characterised in that:—

(a) each cell (160) is arranged to:—

(i) receive input carry and cumulative sum bits together with two input multiplicand input bits of respective first and second kinds,

(ii) generate a new carry bit and an intermediate sum bit corresponding to addition of the input sum and carry bits to the product of the input multiplicand bits,

(iii) output the new carry bit and the first kind multiplicand bit and feed back the intermediate sum bit.

(iv) receive subsequent input carry and first kind multiplicand bits,

(v) generate a further carry bit and a cumulative sum bit corresponding to addition of the subsequent carry input bit and the intermediate sum bit to the product of the second kind multiplicand bit with the subsequent first kind input multiplicand bit, and

(vi) output the further carry and cumulative sum bits and the second and subsequent first kind multiplicand bits; and

(b) the clocking means is arranged to activate storing means (169, 170, 173, 174) in carry and first kind multiplicand bit interconnection lines (162, 163, 166, 167) at twice the rate for other storing means (171, 172, 175, 176) and to activate each of the said other storing means (171, 172, 175, 176) in antiphase with a respective corresponding storing means (171, 172, 175, 176) in an adjacent row.

8. A digital data processor according to Claim 1 characterised in that the array (110) is arranged to multiply a vector by a matrix having elements +1, −1 and 0, each cell (116) being arranged to receive as multiplicand inputs a vector coefficient bit and two bits corresponding to an input matrix element.

9. A digital data processor according to Claim 1 characterised in that the interconnection lines (214 to 228) and storing means (230 to 236) of the array (200) are arranged for multiplicand bit propagation along array rows and for cumulative sums to be accumulated in cascade down array columns.

10. A digital data processor according to Claim 9 characterised in that array outputs are column outputs connected to accumulating means comprising full adder cells (238) arranged to add cascaded cumulative sum contributions to individual computation results.

11. A digital data processor according to Claim 1, 9 or 10 characterised in that the array (400) includes feedforward lines containing clock-activated storing means (402) to relay multiplicand bits from row to row.

12. A digital data processor according to Claim 1, 9, 10 or 11 characterised in that the array (400) includes recirculation lines containing clock-activated storing means (404) arranged to recirculate multiplicand bits repetitively through respective rows.

**Patentansprüche**

1. Digitaldatenprozessor mit

a) einer Anordnung (110) von in Reihen und Spalten angeordneten Bit-Wert-Rechenlogikzellen (116), wobei jede Zelle (116) so geschaltet ist, daß sie entsprechend ihrer logischen Operation Multiplikanden-, Übertragungs- und sich addierende Summen-Eingangsbits empfängt und Übertragungs- und sich addierende Summen - Ausgangsbits erzeugt,

b) Zellenverbindungsleitungen (118 bis 132) zur Bitweiterleitung durch die Anordnung (110), wobei die Leitungen (118 bis 132) taktaktivierte Speichermittel (134 bis 140) zur Bitspeicherung und Bitweitergabe aufweisen,

c) Taktmitteln zur Steuerung der Anordnungsoperation, wobei die Taktmittel so geschaltet sind, daß sie die Speichermittel (134 bis 140) in geeigneter Weise aktivieren, um die Eingabe aufeinanderfolgender Bitkombinationen in jede Zelle (116) und die Kaskadenerzeugung kumulativer Summen entlang Zellenverbindungsleitungen (132) zu synchronisieren, und

d) Anordnungsausgängen (142 bis 148), die mit entsprechenden Zellen (116) verbunden sind, die zur Bildung kumulativer Summen geeignet sind, die sich aus kaskadenartig durch die Anordnung (110) übertragenen Zellenlogikoperationen ergeben, dadurch gekennzeichnet, daß

i) die Zellenverbindungsleitungen (118 bis 132) nur die nächstliegenden Reihen- und Spaltennachbarzellen (116) miteinander verbinden und Leitungswege für die gesamte Bitübertragung durch die Anordnung (110) bilden, und

ii) die Anordnung an taktgesteuerte Eingabemittel (114) angeschlossen ist, die so geschaltet sind, daß Multiplikandeneingangsbits mit geeigneten relativen Verzögerungen in Kombination mit denjenigen der Speichermittel (134 bis 140) erzeugt werden, um eine kumulative Summenanhäufung in Kaskadenform entlang der Zellenverbindungsleitungen (132) zu ergeben.

2. Digitaldatenprozessor nach Anspruch 1, dadurch gekennzeichnet, daß die Speichermittel (134 bis 140) jeweils zwei unabhängig voneinander aktivierbare, in Reihe geschaltete Halbverriegelungen (181, 182) aufweist, und daß die Taktmittel so geschaltet sind, daß sie die Halbverriegelungen (181, 182) abwechselnd aktivieren, um Biteingabe und -Ausgabe zu bewirken.

3. Digitaldatenprozessor nach Anspruch 2, dadurch gekennzeichnet, daß jede Logikzelle (160) so geschaltet ist, daß sie zwei Eingangsmultiplikantenbits erhält.

4. Digitaldatenprozessor nach Anspruch 3, dadurch gekennzeichnet, daß der Prozessor (110) so geschaltet ist, daß er bitparallele Multiplikanden empfängt, und daß jede Zelle (160) so geschaltet ist, daß Übertragungsbits an eine entsprechende Nachbarzelle (160) ausgegeben werden.

5. Digitaldatenprozessor nach Anspruch 1, dadurch gekennzeichnet, daß die Anordnung (110) so geschaltet ist, daß ein Vektor durch eine Matrix mit Koeffizienten gleich dem Wert 1 oder 0 multipliziert wird, und daß die Eingabemittel (114) eine Anordnung von taktgesteuerten Speichermitteln (114) aufweist, die zur Eingabe von aufeinanderfolgenden Matrixdiagonalen zu einer ersten Anordnungskante geschaltet sind.

6. Digitaldatenprozessor nach Anspruch 6, dadurch gekennzeichnet, daß die Anordnung (110) aus

19

# EP 0 073 116 B1

einer Gruppe von j Anordnungen (110) zusammengesetzt ist, wobei j eine positive ganze Zahl und mindestens gleich 2 ist, und außerdem dadurch gekennzeichnet, daß die Anordnungen (110) Eingabemittel aufweisen, die so geschaltet sind, daß sie den k-ten Prozessor (110) mit einer entsprechenden Matrix mit 1-Bit-Koeffizienten speisen, die bestehen aus und in dieser Matrix enthalten sind als individuelle (k−1)-t Bits in der Reihenfolge der Bitsignifikanz aus Mehrbitelementen einer weiteren Matrix, wobei k=1 bis j.

7. Digitaldatenprozessor nach Anspruch 1 oder 4, dadurch gekennzeichnet, daß

a) jede Zelle (160) so geschaltet ist, daß sie

i) Eingangsübertragungs- und kumulative Summenbits zusammen mit zwei Eingabemultiplikanden - Eingangsbits erster und zweiter Art empfängt.

ii) ein neues Übertragungsbit und ein Zwischensummenbit entsprechend der Addition der Eingangssummen- und Übertragungsbits zum Produkt der Eingabemultiplikandenbits erzeugt,

iii) das neue Übertragungsbit und das Multiplikandenbit erster Art ausgibt und das Zwischensummenbit rückführt,

iv) nächstfolgende Eingangsübertragungs- und Multiplikandenbits erster Art empfängt,

v) ein weiteres Übertragungsbit und ein kumulatives Summenbit entsprechend der Addition des nachfolgenden Eingangsübertragungsbits und des Zwischensummenbits zum Produkt des Multiplikandenbits zweiter Art mit dem nachfolgenden Eingabemultiplikandenbit erster Art erzeugt, und

vi) die weiteren Übertragungs- und kumulative Summenbits und die zweiten und nachfolgenden Multiplikandenbits erster Art ausgibt, und

b) die Taktmittel so geschaltet sind, daß sie Speichermittel (169, 170, 173, 174) in Übertragungs- und Erster - Art - Multiplikandenbit - Verbindungsleitungen (162, 163, 166, 167) mit der doppelten Frequenz wie die übrigen Speichermittel (171, 172, 175, 176) aktivieren, und jedes der übrigen Speichermittel (171, 172, 175, 176) gegenphasig mit einem entsprechenden Speichermittel (171, 172, 175, 176) in einer benachbarten Reihe aktivieren.

8. Digitaldatenprozessor nach Anspruch 1, dadurch gekennzeichnet, daß die Anordnung (100) so geschaltet ist, daß sie einen Vektor mit einer Matrix mit Elementen +1, −1 und 0 multipliziert, wobei jede Zelle (116) so geschaltet ist, daß sie als Multiplikandeneingänge ein Vektorkoeffizientenbit und zwei Bits entsprechend einem Eingabematrixelement empfängt.

9. Digitaldatenprozessor nach Anspruch 1, dadurch gekennzeichnet, daß die Verbindungsleitungen (214, 228) und Speichermittel (230 bis 236) der Anordnung (200) für eine Multiplikandenbitweitergabe entlang Anordnungsreihen und für eine Summenkumulation in Kaskadenform entlang Anordnungsspalten geschaltet ist.

10. Digitaldatenprozessor nach Anspruch 9, dadurch gekennzeichnet, daß die Anordnungsausgänge Spaltenausgänge sind, die mit Akkumulationsmitteln verbunden sind, die Volladdierzellen (238) aufweisen, welche kaskadenartige kumulative Summenbestandteile zu individuellen Rechenergebnissen addieren.

11. Digitaldatenprozessor nach Anspruch 1, 9 oder 10, dadurch gekennzeichnet, daß die Anordnung (400) Einspeiseleitungen aufweist, die taktgesteuerte Speichermittel (402) zur Übertragung von Multiplikandenbits von Reihe zu Reihe enthalten.

12. Digitaldatenprozessor nach Anspruch 1, 9, 10 oder 11, dadurch gekennzeichnet, daß die Anordnung (400) Rezirkulationsleitungen aufweist, die taktgesteuerte Speichermittel (404) zum wiederholten Rezirkulieren von Multiplikandenbits durch entsprechende Reihen enthält.

## Revendications

1. Processeur numérique de données, comprenant:

(a) un ensemble (110) de cellules logiques arithmétiques (116) au niveau du bit, disposées en lignes et en colonnes, chaque cellule (116) étant disposée afin qu'elle reçoive des bits d'entrée de multiplicande, de report et de cumul et qu'elle crée des bits de sortie de report et de cumul en fonction de son opération logique,

(b) des lignes (118 à 132) d'interconnexion de cellules destinées à la propagation des bits dans l'ensemble (110), les lignes (118 à 132) comportant les dispositifs (134 à 140) de mémorisation activés par des signaux d'horloge et destinés à assurer la mémorisation et l'avance des bits,

(c) un dispositif d'horloge destiné à commander le fonctionnement de l'ensemble, le dispositif d'horloge étant destiné à activer les dispositifs de mémorisation (134 à 140) d'une manière convenable afin qu'il synchronise la transmission de combinaisons successives de bits à chaque cellule (116) et qu'il assure la création en cascade de cumuls le long des lignes d'interconnexion (132) de cellules, et

(d) des sorties (142 à 148) d'ensembles connectées à des cellules respectives (116) qui conviennent pour la transmission des cumuls résultant des opérations logiques des cellules en cascade dans l'ensemble (110), caractérisé en ce que:

(i) les lignes (118 à 132) d'interconnexion des cellules relient les cellules voisines (116) des lignes et des colonnes les plus proches uniquement et formant des itinéraires pour toutes les propagations des bits dans l'ensemble (110), et

(ii) l'arrangement est connecté à un dispositif d'entrée (114) activé par des signaux d'horloge et destiné à transmettre des bits d'entrée de multiplicande avec des retards relatifs convenables en combinaison avec

20

ceux des dispositifs de mémorisation (134 à 140) afin que la totalisation des cumuls soit réalisée en cascade le long des lignes (132) d'interconnexion des cellules.

2. Processeur numérique de données selon la revendication 1, caractérisé en ce que chaque dispositif de mémorisation (134 à 140) comporte deux demi-bascules (181, 182) qui peuvent être activées indépendamment et qui sont montées en série, et le dispositif d'horloge est disposé de manière qu'il active les demi-bascules (181, 182) en alternance et provoque l'entrée et la sortie des bits.

3. Processeur numérique de données selon la revendication 2, caractérisé en ce que chaque cellule logique (160) est disposée afin qu'elle reçoive deux bits d'entrée de multiplicande.

4. Processeur numérique de données selon la revendication 3, caractérisé en ce que le processeur (110) est réalisé de manière qu'il reçoive des multiplicandes à bits en parallèle et chaque cellule (160) est disposée de manière qu'elle transmette des bits de report à une cellule voisine respective (160).

5. Processeur numérique de données selon la revendication 1, caractérisé en ce que l'ensemble (110) est disposé afin qu'il multiplie un vecteur par une matrice ayant des coefficients égaux à 1 ou 0, et le dispositif d'entrée (114) comporte un arrangement de dispositifs (114) de mémorisation activés par des signaux d'horloge et destinés à transmettre des diagonales successives de la matrice à un premier bord de l'ensemble.

6. Processeur numérique de données selon la revendication 6, caractérisé en ce que l'ensemble (110) fait partie d'un groupe de j ensembles (110), j étant un nombre entier positif au moins égal à 2, et caractérisé aussi en ce que les ensembles (110) ont des dispositifs d'entrée destinés à donner au kième processeur (110) une matrice respective ayant des coefficients à un bit dont la constitution et la disposition dans cette matrice constituent des bits individuels de (k−1)ième ordre de signification de bit tirés d'éléments à plusieurs bits d'une matrice supplémentaire avec k=1 à j.

7. Processeur numérique de données selon la revendication 1 ou 4, caractérisé en ce que:

(a) chaque cellule (160) est réalisée de manière que:

(i) elle reçoive des bits d'entrée de report et de cumul avec deux bits d'entrée de multiplicande d'un premier et d'un second type respectif,

(ii) elle crée un nouveau bit de report et un bit de somme intermédiaire correspondant à l'addition des bits de cumul et de report au produit des bits de multiplicande,

(iii) elle transmette le nouveau bit de report et le bit de multiplicande du premier type et renvoie le bit de somme intermédiaire,

(iv) elle reçoive des bits suivants d'entrée de report et de multiplicande du premier type,

(v) elle crée un bit supplémentaire de report et un bit de cumul correspondant à l'addition du bit suivant d'entrée de report et du bit de somme intermédiaire au produit au bit de multiplicande du second type par le bit suivant de multiplicande du premier type, et

(vi) elle transmette les bits suivants de report et de cumul et les bits de multiplicande du second type puis du premier type, et

(b) le dispositif d'horloge est réalisé de manière qu'il active les dispositifs de mémorisation (169, 170, 173, 174) dans les lignes d'interconnexion de bits de report et de multiplicande du premier type (162, 163, 166, 167) à deux fois la fréquence des autres dispositifs de mémorisation (171, 172, 175, 176) et qu'il active chacun des autres dispositifs de mémorisation (171, 172, 175, 176) en opposition de phase par rapport à un dispositif respectif correspondant de mémorisation (171, 172, 175, 176) d'une ligne adjacente.

8. Processeur numérique de données selon la revendication 1, caractérisé en ce que l'ensemble (110) est réalisé afin qu'il multiplie un vecteur par une matrice ayant des éléments +1, −1 et 0, chaque cellule (116) étant disposée afin qu'elle reçoive, comme entrées de multiplicande, un bit de coefficient de vecteur et deux bits correspondant à un élément de matrice d'entrée.

9. Processeur numérique de données selon la revendication 1, caractérisé en ce que les lignes d'interconnexion (214 à 228) et les dispositifs de mémorisation (230 à 236) de l'ensemble (200) sont disposés de manière qu'ils assurent la propagation des bits de multiplicande le long des lignes d'ensemble et qu'ils totalisent les cumuls en cascade le long des colonnes de l'ensemble.

10. Processeur numérique de données selon la revendication 2, caractérisé en ce que les signaux de sortie d'ensemble sont des signaux de sortie de colonnes connectés à des dispositifs de totalisation comprenant des cellules formant additionneur complet (238) disposées afin qu'elles ajoutent les contributions des cumuls en cascade aux résultats des calculs individuels.

11. Processeur numérique de données selon l'une des revendications 1, 9 et 10, caractérisé en ce que l'ensemble (400) comporte des lignes de réaction positive contenant des dispositifs (402) de mémorisation activés par des signaux d'horloge destinés à relayer les bits de multiplicande d'une ligne à une autre.

12. Processeur numérique de données selon l'une des revendications 1, 9, 10 et 11, caractérisé en ce que l'ensemble (400) comporte des lignes de recirculation contenant les dispositifs de mémorisation (404) activés par des signaux d'horloge et disposées de manière qu'elles fassent recirculer les bits de multiplicande de manière répétée dans les lignes respectives.

FIG.1

FIG.2

1

FIG.3

FIG.4

FIG.5

FIG.6

EP 0 073 116 B1

FIG.7

# FIG.8

# FIG.9

# - FIG.10

# FIG.11

# FIG.12

## FIG.13

EP 0 073 116 B1

FIG.14

# FIG.15

204 B' C'

202 212 212b 212c 212d 200 A' D'

FIG.16

FIG.17

## FIG.18

B''      C''

| | | | | | | | | |
|---|---|---|---|---|---|---|---|---|
| 0<br>$a_2(9)$ | $x_1(2)$<br>0 | 0<br>$a_1(9)$ | $x_0(2)$<br>0 | $x_2(1)$<br>$a_0(9)$ | 0<br>$a_2(9)$ | $x_1(1)$<br>0 | 0<br>$a_1(9)$ | $x_0(1)$<br>0 |
| $x_1(3)$<br>$a_0(8)$ | 0<br>$a_2(8)$ | $x_0(3)$<br>0 | $x_2(2)$<br>$a_1(8)$ | 0<br>0 | $x_1(2)$<br>$a_0(8)$ | 0<br>$a_2(8)$ | $x_0(2)$<br>0 | $x_2(1)$<br>$a_1(8)$ |
| 0<br>0 | $x_0(4)$<br>$a_0(7)$ | $x_2(3)$<br>$a_2(7)$ | 0<br>0 | $x_1(3)$<br>$a_1(7)$ | 0<br>0 | $x_0(3)$<br>$a_0(7)$ | $x_2(2)$<br>$a_2(7)$ | 0<br>0 |
| $x_0(5)$<br>$a_1(6)$ | $x_2(4)$<br>0 | 0<br>$a_0(6)$ | $x_1(4)$<br>$a_2(6)$ | 0<br>0 | $x_0(4)$<br>$a_1(6)$ | $x_2(3)$<br>0 | 0<br>$a_0(6)$ | $x_1(3)$<br>$a_2(6)$ |
| $x_2(5)$<br>0 | 0<br>$a_1(5)$ | $x_1(5)$<br>0 | 0<br>$a_0(5)$ | $x_0(5)$<br>$a_2(5)$ | $x_2(4)$<br>0 | 0<br>$a_1(5)$ — 304 | $x_1(4)$<br>0 | 0<br>$a_0(5)$ |
| 0<br>$a_2(4)$ | $x_1(6)$<br>0 | 0<br>$a_1(4)$ | $x_0(6)$<br>0 | $x_2(5)$<br>$a_0(4)$ | 0<br>$a_2(4)$ | $x_1(5)$<br>0 — 302 | 0<br>$a_1(4)$ | $x_0(5)$<br>0 |
| $x_1(7)$<br>$a_0(3)$ | 0<br>$a_2(3)$ | $x_0(7)$<br>0 | $x_2(6)$<br>$a_1(3)$ | 0<br>0 | $x_1(6)$<br>$a_0(3)$ | 0<br>$a_2(3)$ | $x_0(6)$<br>0 | $x_2(5)$<br>$a_1(3)$ |
| 0<br>0 | $x_0(8)$<br>$a_0(2)$ | $x_2(7)$<br>$a_2(2)$ | 0<br>0 | $x_1(7)$<br>$a_1(2)$ | 0<br>0 | $x_0(7)$<br>$a_0(2)$ | $x_2(6)$<br>$a_2(2)$ | 0<br>0 |
| $x_0(9)$<br>$a_1(1)$ | $x_2(8)$<br>0 | 0<br>$a_0(1)$ | $x_1(8)$<br>$a_2(1)$ | 0<br>0 — 212 | $x_0(8)$<br>$a_1(1)$ | $x_2(7)$<br>0 | 0<br>$a_0(1)$ | $x_1(7)$<br>$a_2(1)$ |
| $x_2(9)$<br>0 | 0<br>$a_1(0)$ | $x_1(9)$<br>0 | 0<br>$a_0(0)$ | $x_0(9)$<br>$a_2(0)$ | $x_2(8)$<br>0 | 0<br>$a_1(0)$ | $x_1(8)$<br>0 | 0<br>$a_0(0)$ |

300 —

A''      D''

FIG.19

FIG.20

# FIG.21a

$\underline{x}(5)$ $\underline{x}(4)$ $\underline{x}(3)$ $\underline{x}(2)$ $\underline{x}(1)$ $\underline{x}(0)$      $\underline{a}(0)$ $\underline{a}(0)$ $\underline{a}(0)$ $\underline{a}(0)$

$\underline{x}(6)$ $\underline{x}(5)$ $\underline{x}(4)$ $\underline{x}(3)$ $\underline{x}(2)$ $\underline{x}(1)$      $\underline{a}(1)$ $\underline{a}(1)$ $\underline{a}(1)$ $\underline{a}(1)$

$\underline{x}(7)$ $\underline{x}(6)$ $\underline{x}(5)$ $\underline{x}(4)$ $\underline{x}(3)$ $\underline{x}(2)$      $\underline{a}(2)$ $\underline{a}(2)$ $\underline{a}(2)$ $\underline{a}(2)$

$\underline{x}(8)$ $\underline{x}(7)$ $\underline{x}(6)$ $\underline{x}(5)$ $\underline{x}(4)$ $\underline{x}(3)$      $\underline{a}(3)$ $\underline{a}(3)$ $\underline{a}(3)$ $\underline{a}(3)$

$\underline{x}(9)$ $\underline{x}(8)$ $\underline{x}(7)$ $\underline{x}(6)$ $\underline{x}(5)$ $\underline{x}(4)$      $\underline{a}(4)$ $\underline{a}(4)$ $\underline{a}(4)$ $\underline{a}(4)$

$\underline{x}(10)$ $\underline{x}(9)$ $\underline{x}(8)$ $\underline{x}(7)$ $\underline{x}(6)$ $\underline{x}(5)$      $\underline{a}(5)$ $\underline{a}(5)$ $\underline{a}(5)$ $\underline{a}(5)$

$\underline{x}(11)$ $\underline{x}(10)$ $\underline{x}(9)$ $\underline{x}(8)$ $\underline{x}(7)$ $\underline{x}(6)$      $\underline{a}(6)$ $\underline{a}(6)$ $\underline{a}(6)$ $\underline{a}(6)$

$\underline{x}(11)$ $\underline{x}(10)$ $\underline{x}(9)$ $\underline{x}(8)$ $\underline{x}(7)$      $\underline{a}(7)$ $\underline{a}(7)$ $\underline{a}(7)$ $\underline{a}(7)$

$\underline{x}(12)$ $\underline{x}(11)$ $\underline{x}(10)$ $\underline{x}(9)$ $\underline{x}(8)$      504 $\underline{a}(8)$ $\underline{a}(8)$ $\underline{a}(8)$ $\underline{a}(8)$

$\underline{x}(12)$ $\underline{x}(11)$ $\underline{x}(10)$ $\underline{x}(9)$    502      $\underline{a}(9)$ $\underline{a}(9)$ $\underline{a}(9)$ $\underline{a}(9)$

500

# FIG.21b

$\underline{x}(5)\underline{x}(4)\ \underline{x}(3)\ \underline{x}(2)\ \underline{x}(1)\ \underline{x}(0)$     $\underline{a}(9)\ \underline{a}(9)\ \underline{a}(9)\ \underline{a}(9)$

$\underline{x}(6)\ \underline{x}(5)\ \underline{x}(4)\ \underline{x}(3)\ \underline{x}(2)\ \underline{x}(1)$     $\underline{a}(8)\ \underline{a}(8)\ \underline{a}(8)\ \underline{a}(8)$

$\underline{x}(7)\ \underline{x}(6)\ \underline{x}(5)\ \underline{x}(4)\ \underline{x}(3)\ \underline{x}(2)$     $\underline{a}(7)\ \underline{a}(7)\ \underline{a}(7)\ \underline{a}(7)$

$\underline{x}(8)\ \underline{x}(7)\ \underline{x}(6)\ \underline{x}(5)\ \underline{x}(4)\ \underline{x}(3)$     $\underline{a}(6)\ \underline{a}(6)\ \underline{a}(6)\ \underline{a}(6)$

$\underline{x}(9)\ \underline{x}(8)\ \underline{x}(7)\ \underline{x}(6)\ \underline{x}(5)\ \underline{x}(4)$     $\underline{a}(5)\ \underline{a}(5)\ \underline{a}(5)\ \underline{a}(5)$

$\underline{x}(10)\ \underline{x}(9)\ \underline{x}(8)\ \underline{x}(7)\ \underline{x}(6)\ \underline{x}(5)$     $\underline{a}(4)\ \underline{a}(4)\ \underline{a}(4)\ \underline{a}(4)$

$\underline{x}(11)\ \underline{x}(10)\ \underline{x}(9)\ \underline{x}(8)\ \underline{x}(7)\ \underline{x}(6)$     $\underline{a}(3)\ \underline{a}(3)\ \underline{a}(3)\ \underline{a}(3)$

$\underline{x}(12)\ \underline{x}(11)\ \underline{x}(10)\ \underline{x}(9)\ \underline{x}(8)\ \underline{x}(7)$     $\underline{a}(2)\ \underline{a}(2)\ \underline{a}(2)\ \underline{a}(2)$

$\underline{x}(12)\ \underline{x}(11)\ \underline{x}(10)\ \underline{x}(9)\ \underline{x}(8)$     $\underline{a}(1)\ \underline{a}(1)\ \underline{a}(1)\ \underline{a}(1)$

$\underline{x}(13)\ \underline{x}(12)\ \underline{x}(11)\ \underline{x}(10)\ \underline{x}(9)$     $\underline{a}(0)\ \underline{a}(0)\ \underline{a}(0)\ \underline{a}(0)$

500

**EP 0 073 116 B1**

## FIG.22

$\underline{x}(0)$ $\underline{x}(0)$ $\underline{x}(0)$ $\underline{x}(0)$ $\underline{x}(0)$    $\underline{a}_{00}$ $\underline{a}_{10}$ $\underline{a}_{20}$ $\underline{a}_{30}$ $\underline{a}_{40}$

$\underline{x}(1)$ $\underline{x}(1)$ $\underline{x}(1)$ $\underline{x}(1)$ $\underline{x}(1)$    $\underline{a}_{01}$ $\underline{a}_{11}$ $\underline{a}_{21}$ $\underline{a}_{31}$ $\underline{a}_{41}$

$\underline{x}(2)$ $\underline{x}(2)$ $\underline{x}(2)$ $\underline{x}(2)$ $\underline{x}(2)$    $\underline{a}_{02}$ $\underline{a}_{12}$ $\underline{a}_{22}$ $\underline{a}_{32}$ $\underline{a}_{42}$

$\underline{x}(3)$ $\underline{x}(3)$ $\underline{x}(3)$ $\underline{x}(3)$ $\underline{x}(3)$    $\underline{a}_{03}$ $\underline{a}_{13}$ $\underline{a}_{23}$ $\underline{a}_{33}$ $\underline{a}_{43}$

$\underline{x}(4)$ $\underline{x}(4)$ $\underline{x}(4)$ $\underline{x}(4)$ $\underline{x}(4)$    $\underline{a}_{04}$ $\underline{a}_{14}$ $\underline{a}_{24}$ $\underline{a}_{34}$ $\underline{a}_{44}$

## FIG.23

$\underline{x}(3)$ $\underline{x}(2)$ $\underline{x}(1)$ $\underline{x}(0)$    $\underline{a}_{20}$ $\underline{a}_{31}$ $\underline{a}_{42}$ $\underline{a}_{53}$

$\underline{x}(4)$ $\underline{x}(3)$ $\underline{x}(2)$ $\underline{x}(1)$ $\underline{x}(0)$    $\underline{a}_{10}$ $\underline{a}_{21}$ $\underline{a}_{32}$ $\underline{a}_{43}$ $\underline{a}_{54}$

$\underline{x}(5)$ $\underline{x}(4)$ $\underline{x}(3)$ $\underline{x}(2)$ $\underline{x}(1)$ $\underline{x}(0)$    $\underline{a}_{00}$ $\underline{a}_{11}$ $\underline{a}_{22}$ $\underline{a}_{33}$ $\underline{a}_{44}$ $\underline{a}_{55}$

$\underline{x}(5)$ $\underline{x}(4)$ $\underline{x}(3)$ $\underline{x}(2)$ $\underline{x}(1)$    $\underline{a}_{01}$ $\underline{a}_{12}$ $\underline{a}_{23}$ $\underline{a}_{34}$ $\underline{a}_{45}$

$\underline{x}(5)$ $\underline{x}(4)$ $\underline{x}(3)$ $\underline{x}(2)$    $\underline{a}_{02}$ $\underline{a}_{13}$ $\underline{a}_{24}$ $\underline{a}_{35}$

# FIG.24

# FIG.25

# FIG.26